# EUROPÄISCHE PATENTSCHRIFT

(11) **EP 2 526 598 B1**
(45) Veröffentlichungstag und Bekanntmachung des Hinweises auf die Patenterteilung: **20.04.2016**
(21) Anmeldenummer: 10700559.7
(22) Anmeldetag: 18.01.2010
(51) Int. Cl.: H02B 13/035, H02B 13/045

(54) **GEHÄUSE EINER DRUCKGASISOLIERTEN BAUGRUPPE FÜR EINE ELEKTRISCHE SCHALTANLAGE**
MODULAR CASING FOR GAS-INSULATED SWITCHGEAR
ENVELOPPE MODULAIRE POUR INSTALLATION ÉLECTRIQUE À ISOLATION GAZEUSE

(43) Veröffentlichungstag der Anmeldung: 28.11.2012
(73) Patentinhaber: ABB Technology AG, 8050 Zürich (CH)
(72) Erfinder: SABANI, Arben, CH-8125 Niederglatt (CH); SOLOGUREN-SANCHEZ, Diego, CH-5430 Wettingen (CH); WÜRGLER, Roland, CH-8305 Dietlikon (CH); BOLLI, Tilo, CH-3658 Merligen (CH)
(74) Vertreter: ABB Patent Attorneys
(86) Internationale Anmeldenummer: PCT/EP2010/050518
(87) Internationale Veröffentlichungsnummer: WO 2011/085821

(56) Entgegenhaltungen:
- EP-A1- 0 204 082
- EP-A1- 2 254 135
- EP-A2- 0 291 762
- WO-A1-2010/133692
- DE-A1-102006 062 540
- DE-U1- 8 907 711

## Beschreibung

Aspekte der Erfindung liegen auf dem Gebiet der Schaltanlagen, insbesondere der gasisolierten Hochspannungs-Schaltanlagen (auch als GIS bezeichnet), und betreffen ein Gehäuse für ein Schaltanlagenmodul einer Schaltanlage, insbesondere ein Gehäuse mit einem gemeinsamen Gasraum zur Aufnahme eines Isoliergases und von drei gasisolierten Sammelschienen-Leiterabschnitten. Weitere Aspekte der Erfindung betreffen ein Schaltanlagenmodul sowie ein Schaltfeld mit einem solchen Gehäuse und eine Unterstation.

Bei typischen gasisolierten Hochspannungsanlagen ist eine modulare Bauweise der Funktionsgruppen wie Leistungsschalter, Erdschalter usw. eines Schaltfelds bekannt. Ein Schaltfeld wird hier allgemein als Feld einer Schaltanlage verstanden und kann z.B. auch ein Abgangsfeld bezeichnen. Bei den auf dem Markt befindlichen GIS-Schaltanlagen werden GIS, deren Schaltfelder eine einphasig gekapselte Führung der Primärleiter aufweisen, grundsätzlich von GIS, deren Schaltfelder eine dreiphasig gekapselte Führung der Primärleiter aufweisen, voneinander unterschieden. Unter einphasiger Kapselung wird eine Kapselung, die einen eigenen Gasraum für jeden der Primärleiter vorsieht, verstanden, während unter dreiphasiger Kapselung die Anordnung dreier Primärleiter in einem gemeinsamen Gasraum verstanden wird. Unter Primärleitern werden Leiter verstanden, welche eine Nennlast im Hochspannungsbereich aufweisen.

Die Art der Kapselung (ein- oder dreiphasig) ist hauptsächlich durch die angestrebte Nennspannung bedingt: Einphasig gekapselte Schaltfelder (Felder) erlauben bei bei vergleichbarem Aufwand eine deutlich höhere Nennspannung. Weiter hat die Art der Kapselung grundlegende Auswirkungen auf das Layout der Felder und auf die Gestaltung und Anordnung der modularen Funktionsgruppen. Ein Vertreter eines Gehäuses für eine dreiphasig gekapselte Führung der Primärleiter ist beispielsweise in der WO 2008/022893 A1 beschrieben.

Ein weiteres Gehäuse für eine Hochspannungs-Schaltanlage ist aus der DE 7607568 U bekannt. Dieses Gehäuse ist jedoch insbesondere bezüglich seines Raumbedarfs und der vielseitigen Verwendbarkeit in einem modularen System noch verbesserungsfähig.

Um eine gasisolierte Unterstation zu realisieren, werden typischerweise mindestens zwei Felder eingangsseitig oder ausgangsseitig mit einer sogenannten Sammelschiene verbunden. Dabei umfasst der Begriff Sammelschiene sowohl ein- als auch dreifach gekapselt geführte Primärleiterschienen. Somit werden auch bezüglich der Sammelschiene GIS mit einphasig gekapselter Sammelschienen-Führung grundsätzlich von GIS mit dreiphasig gekapselter Sammelschienen-Führung unterschieden.

Da GIS-Schaltanlagen häufig auch in Ballungsgebieten oder anderen räumlich beengten Gebieten eingesetzt werden, kommt neben der Leistungsfähigkeit auch der Kompaktheit einer Unterstation eine wichtige Bedeutung zu. Um diese beiden Anforderungen zu bedienen, ist es angestrebt, die Leistungsdichte (pro Bauvolumen) eines GIS-Schaltfelds zu erhöhen. Auch der Wartungsfreundlichkeit einer GIS-Schaltanlage kommt eine Bedeutung zu.

EP 0 204 082 A1 offenbart das Oberbegriff des Anspruchs 1.

Vor diesem Hintergrund wird ein Gehäuse für ein Schaltanlagenmodul gemäß Anspruch 1 und ein Schaltfeld gemäß Anspruch 22 vorgeschlagen. Weitere Vorteile, Merkmale, Aspekte und Details der Erfindung sowie bevorzugte Ausführungen und besondere Aspekte der Erfindung ergeben sich aus den Unteransprüchen, der Beschreibung und den Figuren.

Gemäß einem Aspekt der Erfindung wird ein Gehäuse für ein Schaltanlagenmodul einer Schaltanlage vorgeschlagen. Das Gehäuse bildet einen gemeinsamen Gasraum, der zur Aufnahme von einem Isoliergas und von drei gasisolierten Sammelschienen-Leiterabschnitten des Schaltanlagenmoduls geeignet ist. Das Gehäuse umfasst: drei erste Sammelschienen-Öffnungen, wobei die drei ersten Sammelschienen-Öffnungen flächenmäßig in einer ersten Öffnungs-Ebene und entlang einer ersten Gerade angeordnet sind; drei zweite Sammelschienen-Öffnungen, wobei die drei zweiten Sammelschienen-Öffnungen auf einer den drei ersten Sammelschienen-Öffnungen gegenüberliegenden Seite des Gehäuses angeordnet sind; und drei Abgangsleiter-Öffnungen, wobei die drei Abgangsleiter-Öffnungen flächenmäßig in einer zweiten Öffnungs-Ebene und entlang einer zweiten Gerade angeordnet sind.

Gemäß einem weiteren Aspekt der Erfindung wird ein Gehäuse für ein Schaltanlagenmodul einer Schaltanlage vorgeschlagen. Das Gehäuse bildet einen gemeinsamen Gasraum, der zur Aufnahme von einem Isoliergas und von drei gasisolierten Sammelschienen-Leiterabschnitten des Schaltanlagenmoduls geeignet ist. Das Gehäuse umfasst drei erste Sammelschienen-Öffnungen, und drei Abgangsleiter-Öffnungen. Das Gehäuse weist einen Durchbruch (bzw. ein Durchbruch) auf, welcher den gemeinsamen Gasraum durchstößt. Das durch den gemeinsamen Gasraum definierte Innenvolumen ist somit zusammenhängend, aber nicht einfach zusammenhängend.

Gemäß einem weiteren Aspekt der Erfindung wird ein Schaltanlagenmodul vorgeschlagen, welches ein Gehäuse nach einem der hierin vorgeschlagenen Aspekte umfasst. Das Schaltanlagenmodul umfasst weiter drei Sammelschienen-Nominalleiter (auch als Sammelschienen-Leiterabschnitte bezeichnet), die sich jeweils von einer jeweiligen der ersten Sammelschienen-Anschlussöffnungen zu einer jeweiligen der zweiten Sammelschienen-Anschlussöffnungen erstrecken; und drei Abgangs-Nominalleiter, die sich jeweils von dem Inneren des Gehäuses zu einer jeweiligen der zweiten Abgangs-Anschlussöffnungen erstrecken. Nach einem weiteren Aspekt der Erfindung wird ein Schaltfeld und eine Unterstation (Schaltanlage) mit einem solchen Gehäuse bzw. mit einem solchen Schaltanlagenmodul vorgeschlagen.

Ein Vorteil zumindest einiger Aspekte der Erfindung liegt darin, dass die Leistungsdichte (pro Bauvolumen) eines GIS-Schaltfelds und/oder einer Unterstation erhöht werden kann. Dieser Vorteil wird dadurch erreicht, dass durch den gemeinsamen Gasraum eine kompakte modulare Bauweise eines Sammelschienen-Moduls ermöglicht wird, wobei die separaten Öffnungen (Sammelschienen-Öffnungen und durch die Abgangsleiter-Öffnungen) zugleich eine Verwendung in einem ansonsten zumindest teilweise einphasig gekapselten Schaltfeld erlauben, das hohe Hochspannungen erlaubt. Die Vorteile einer einphasig gekapselten Primärleiterführung, insbesondere im Bereich der Sammelschiene werden somit mit Vorteilen einer dreiphasig gekapselten Modulbauweise vereinigt. So ist etwa durch den gemeinsamen Gasraum eine vereinfachte Überwachung des Gasdrucks und insgesamt eine Reduktion des Gehäusematerials und des erforderlichen Gasvolumens ermöglicht. Auch sind nur eine einzige Befüllung mit Isoliergas, eine einzige Überwachung des Gases und eine einzige Überdruckschutzmechanik erforderlich. Ein gemeinsames Gehäuse für drei Phasen wiegt darüber hinaus auch weniger und ist in der Regel kostengünstiger als drei separate Gehäuse. Zusätzlich wird durch die Anordnung der Öffnungen ein Gehäuse nicht nur mit geringen äußeren Abmessungen, sondern auch mit geringem Innenvolumen ermöglicht, so dass auch das Schutzgas-Füllvolumen reduziert werden kann. Zur potentiell platzsparenden Bauweise trägt zusätzlich bei, dass die Primäranschlüsse nahe zueinander angeordnet werden können.

Weiter wird durch die Anordnung der Öffnungen entlang jeweiliger Geraden und durch die gegenseitige Orientierung dieser Geraden eine platzsparende Bauweise ermöglicht. Weiter lassen sich von den Abgangsleiter-Öffnungen abgehende Leiter in Richtung der ersten Geraden weiterführen, ohne sich gegenseitig in die Quere zu kommen, da die zweite Gerade gegenüber der ersten Gerade geneigt ist.

Weitere Vorteile liegen in der Modularität des Gehäuses. Insbesondere bei Anordnung der Öffnungen in einem Einheits-Abstand kann das Gehäuse als Teil eines einheitlichen modularen Systems verwendet werden. Insbesondere im Rahmen eines Modulsystems besteht ein Vorteil in der vielseitigen Verwendbarkeit des Gehäuses bzw. eines das Gehäuse umfassenden Schaltanlagenmoduls. Das Vorhandensein von gegenüberliegenden ersten und zweiten Sammelschienen-Öffnungen erlaubt beispielsweise eine vielseitige Verwendbarkeit des Gehäuses in verschiedenen Orientierungen sowie eine Hintereinanderschaltung mehrerer Module entlang einer durchgehenden Sammelschiene. Besondere Vorteile ergeben sich, wenn das Gehäuse Symmetrieeigenschaften aufweist, da es dann beispielsweise um 180° gedreht für einen weiteren Zweck verwendet werden kann, unter Umständen mit einer weiteren Orientierung der Öffnungen. Dies bedeutet gleichzeitig einen höheren Freiheitsgrad für das Design/ die Konstruktion des Feldes, ohne dass die Anzahl bereitzustellender Module erhöht werden müsste. Unter Modularität wir die vielseitige Verwendbarkeit des Gehäuses verstanden. So ist das Gehäuse sowohl in Konfigurationen mit Doppel-Sammelschiene als auch in solchen mit Einfach-Sammelschiene und/oder als Brückenmodul einsetzbar. Dadurch, dass das Gehäuse mehrere Funktionen des Moduls erlaubt, ist eine Reduzierung der Kosten möglich.

Insbesondere durch die flächenmäßige Anordnung der Öffnungen in jeweiligen Öffnungs-Ebenen ist auch ein erleichterter Einbau und Ausbau des Moduls mit dem erfindungsgemässen Gehäuse möglich. Beispielsweise kann das Gehäuse sowohl in Richtung der ersten Gerade als auch in Richtung der zweiten Gerade in ein Schaltfeld ein- und ausgebaut werden. Sogar das gesamte Schaltfeld kann in einer dieser Richtungen ein- und ausgebaut werden. Das erlaubt insbesondere einen schnellen Ausbau und Austausch des Schaltanlagenmoduls im Reparatur- oder Wartungsfall. Durch diese Vorteile lassen sich verbesserte Reparatur- und Wartungskonzepte realisieren.

Die zweite Gerade verläuft in Ausführungsformen (d.h. gemäß einem vorteilhaften, aber nicht zwingenden Aspekt der Erfindung, was auch durch den Ausdruck "insbesondere" ausgedrückt werden kann) gegenüber der ersten Gerade geneigt (d.h. nicht parallel; die Geraden können sich schneiden oder zueinander windschief stehen). In Ausführungsformen verläuft die zweite Gerade senkrecht zur ersten Gerade. Alternativ hierzu sind auch Ausführungsformen möglich, in denen die die zweite Gerade parallel zur ersten Gerade verläuft. In weiteren Ausführungsformen erstreckt sich die zweite Öffnungs-Ebene rechtwinklig zu der ersten Öffnungs-Ebene. Aus dieser senkrechten Anordnung der zweiten Gerade bzw. Öffnungs-Ebene gegenüber der ersten Gerade bzw. Öffnungs-Ebene ergeben sich Vorteile besonders hinsichtlich der vielseitigen Einsetzbarkeit des Sammelschienengehäuses in einer GIS.

Gemäß einem Aspekt wird ein orthogonales x-y-z-Bezugssystem dadurch definiert, dass die erste Gerade die z-Richtung definiert. Gemäß einem Aspekt definiert die zweite Gerade eine zur z-Richtung senkrechte y-Richtung, und damit auch eine zur z- und y-Richtung senkrechte x-Richtung.

Gemäß einem Aspekt verlaufen die erste Gerade, die zweite Gerade, die erste Öffnungs-Ebene bzw. die zweite Öffnungs-Ebene gemäß zumindest einer der folgenden Anordnungen: (a) Die zweite Öffnungs-Ebene ist quer, in Ausführungsformen senkrecht zu der ersten Öffnungs-Ebene angeordnet; (b): Die zweite Gerade (6) ist gegenüber der ersten Gerade so versetzt, dass sich die erste und die zweite Gerade nicht schneiden; (c): Die zweite Gerade verläuft geneigt, in Ausführungsformen senkrecht zu der ersten Öffnungs-Ebene; und / oder (d) Die erste Gerade verläuft parallel zu der zweiten Öffnungs-Ebene. Gemäß einem Aspekt ist die dritte Gerade parallel zur z-Richtung. Gemäß einem Aspekt ist die erste Öffnungs-Ebene parallel zur z- und y-Richtung. Gemäß einem Aspekt ist die zweite Öffnungs-Ebene parallel zur x- und y-Richtung.

Gemäß einem Aspekt bildet das Innenvolumen des Gehäuses einen zusammenhängenden Gasraum, wobei die drei ersten Sammelschienen-Öffnungen, die drei zweiten Sammelschienen-Öffnungen, und die drei Abgangsleiter-Öffnungen jeweils einen separaten Zugang zum Gasraum von außerhalb des Gehäuses zur Verfügung stellen oder bilden. Der Gasraum steht also mit den drei ersten und zweiten Sammelschienen-Öffnungen und mit den drei Abgangsleiter-Öffnungen in Verbindung. Gemäß einem Aspekt sind die drei zweiten Sammelschienen-Öffnungen ) flächenmäßig in einer dritten Öffnungs-Ebene und entlang einer dritten Gerade angeordnet, wobei die dritte Öffnungs-Ebene parallel zu der ersten Öffnungs-Ebene ist und die dritte Gerade parallel zur ersten Gerade ist. Insbesondere kann eine jede der drei zweiten Sammelschienen-Öffnungen paarweise gegenüber einer jeweiligen der drei ersten Sammelschienen-Öffnungen angeordnet sein und mit dieser ein jeweiliges Sammelschienen-Öffnungs-Paar zur Aufnahme eines jeweiligen durchgehenden geraden Sammelschienen-Leiterabschnitts dazwischen bilden, wobei sich der gerade Sammelschienen-Leiterabschnitt insbesondere senkrecht zur ersten und dritten Öffnungs-Ebene erstreckt. Gemäß einem weiteren Aspekt begrenzt jede der drei ersten Sammelschienen-Öffnungen mit der jeweiligen der drei zweiten Sammelschienen-Öffnungen einen sich dazwischen erstreckenden, zylinderförmigen Gasraumabschnitt des Gasraums stirnseitig. Gemäß einem weiteren Aspekt erstrecken sich die zylinderförmigen Gasraumabschnitte jeweils entlang einer geraden Längsachse. Der Querschnitt der Gasraumabschnitte kann beispielsweise kreisförmig, oval, oder ungleichförmig sein.

Gemäß einem Aspekt ist eine Gehäuse-Außenfläche bezüglich einer konvexen Einhüllenden zumindest partiell eingezogen ausgebildet. Die Einhüllende beschreibt die globale Form der Gehäuse-Außenfläche ohne Rücksicht auf für diese Form irrelevante lokale Elemente wie Schrauben, Griffe, usw. Die Einhüllende wird als diejenige Form verstanden, welche sich ergibt, wenn man das Gehäuse mit einer gespannten Folie umwickelt, wobei die die Einhüllende definierende Folie jeweils nur an den Vorsprüngen, etwa der Kontur der flanschartigen Adapterabschnitte und dergleichen aufliegen würde. Die Gehäuse-Außenfläche hat somit konkave Einbuchtungen gegenüber der Einhüllenden. Diese Einbuchtungen können in einem Übergangsbereich zwischen den ersten bzw. zweiten Sammelschienen-Öffnungen und den Abgangsleiter-Öffnungen und / oder in einem Übergangsbereich zwischen den ersten Sammelschienen-Öffnungen und den zweiten Sammelschienen-Öffnungen vorhanden sein.

Gemäß einem Aspekt umfasst die erste Sammelschienen-Anschlussgruppe für jede der drei ersten Sammelschienen-Öffnungen je einen hervorstehenden Rohrstummel, der in der jeweiligen der ersten Sammelschienen-Öffnungen mündet. Gemäß einem Aspekt umfasst die zweite Sammelschienen-Anschlussgruppe für jede der drei zweiten Sammelschienen-Öffnungen je einen hervorstehenden Rohrstummel, der in der jeweiligen der zweiten Sammelschienen-Öffnungen mündet. Gemäß einem Aspekt sind die ersten Sammelschienen-Öffnungen und / oder die zweiten Sammelschienen-Öffnungen und / oder die Abgangs-Öffnungen an einer Stirnfläche des jeweiligen Rohrstummels angeordnet. Je nach Anforderungen und Ausführungsformen sind die Rohrstummel voneinander beabstandet, d.h. nicht miteinander verschmolzen, oder miteinander verschmolzen.

Gemäß einem Aspekt umfasst die erste Sammelschienen-Anschlussgruppe für jede der drei ersten Sammelschienen-Öffnungen je einen die jeweilige Öffnung umfangsmäßig umgebenden Flansch, wobei der Flansch optional von einem Bereich hinter der Öffnung und außerhalb des Gehäuses aus zugänglich ist. Die Flansche der ersten Sammelschienen-Öffnungen und / oder der zweiten Sammelschienen-Öffnungen und / oder der Abgangs-Öffnungen sind je nach Ausführungsform in einen gemeinsamen Wandabschnitt einer Hauptkammer des Gehäuses vollintegriert, teilintegriert, oder durch Rohrstummel von einem Wandabschnitt der Hauptkammer beabstandet und als eigenständige Flansche gestaltet. Je nach Ausführungsform sind alle Flansche der ersten Sammelschienen-Öffnungen und / oder der zweiten Sammelschienen-Öffnungen und / oder der Abgangs-Öffnungen separat ausgestaltet und voneinander beabstandet, oder zumindest zwei der Flansche sind miteinander zu einer Flansch-Gruppe verbunden. Beispielsweise können alle Flansche der ersten Sammelschienen-Öffnungen und / oder der zweiten Sammelschienen-Öffnungen und / oder der Abgangs-Öffnungen miteinander zu einer jeweiligen ersten Sammelschienen-Flansch-Gruppe und / oder zweiten Sammelschienen-Flansch-Gruppe und / oder Abgangs-Flansch-Gruppe verbunden sein.

Gemäß einem Aspekt sind die ersten bzw. zweiten Sammelschienen-Öffnungen jeweils zur y-Richtung hin gerichtet, d.h. ihre Normale erstreckt sich in y-Richtung. Somit spannen die zueinander parallelen Normalen der Öffnungen eine Sammelschienen-Ebene (y-z-Ebene) auf, so dass Nominalleiter, die die Öffnungen zentral und senkrecht verlassen, in der y-z-Ebene liegen. Die Sammelschienen-Öffnungen sind von Flanschen umgeben. Die Flansche liegen in einer gemeinsamen Ebene, einer x-z-Ebene. Jede der drei Sammelschienen-Öffnungen weist einen eigenen separaten Flansch auf. Der Flansch ist insbesondere mit einer Befestigungeinrichtung für einen Stütz-Isolator versehen. Die Befestigungseinrichtung umfasst insbesondere in dem Flansch gebildete Durchbrüche für Befestigungsschrauben.
Gemäß einem Aspekt umfasst das Gehäuse drei Abgangsleiter-Gehäuseabschnitte, wobei die drei Abgangsleiter-Öffnungen an jeweils einem der drei Abgangsleiter-Gehäuseabschnitte angeordnet sind. Gemäß einem Aspekt verbindet zumindest einer der drei Abgangsleiter-Gehäuseabschnitte die Innenvolumina von jeweils zumindest zweien der drei Sammelschienen-Gehäuseabschnitte des Gasraums fluid miteinander. Gemäß einem Aspekt verbindet jeder der drei Abgangsleiter-Gehäuseabschnitte die Innenvolumina von jeweils zumindest zweien der Sammelschienen-Gehäuseabschnitte miteinander. Gemäß einem Aspekt verbindet zumindest einer der drei Abgangsleiter-Gehäuseabschnitte die Innenvolumina der drei Sammelschienen-Gehäuseabschnitte miteinander. Gemäß einem Aspekt verbindet jeder der drei Abgangsleiter-Gehäuseabschnitte die Innenvolumina der drei Sammelschienen-Gehäuseabschnitte miteinander. Gemäß einem Aspekt verbindet ein erster Abgangsleiter-Gehäuseabschnitt der drei Abgangsleiter-Gehäuseabschnitte die drei Sammelschienen-Gehäuseabschnitte direkt fluid miteinander, ein zweiter Abgangsleiter-Gehäuseabschnitt verbindet lediglich zwei der drei Sammelschienen-Gehäuseabschnitte direkt fluid miteinander, und ein dritter Abgangsleiter-Gehäuseabschnitt ist lediglich mit einem einzigen der drei Sammelschienen-Gehäuseabschnitte direkt fluid verbunden, oder aber auch der dritte Abgangsleiter-Gehäuseabschnitt verbindet die drei Sammelschienen-Gehäuseabschnitte direkt fluid miteinander. Gemäß einem Aspekt ist der erste Abgangsleiter-Gehäuseabschnitt den ersten Sammelschienen-Öffnungen nächstliegend, der zweite Abgangsleiter-Gehäuseabschnitt mittig, und der dritte Abgangsleiter-Gehäuseabschnitt den zweiten Sammelschienen-Öffnungen nächstliegend angeordnet. Gemäß einem weiteren Aspekt verbindet ein den ersten Sammelschienen-Öffnungen nächstliegender der drei Abgangsleiter-Gehäuseabschnitte die drei Sammelschienen-Gehäuseabschnitte fluid miteinander, und / oder ein mittig angeordneter der drei Abgangsleiter-Gehäuseabschnitte verbindet lediglich zwei der drei Sammelschienen-Gehäuseabschnitte fluid miteinander, und / oder ein den zweiten Sammelschienen-Öffnungen nächstliegender der drei Abgangsleiter-Gehäuseabschnitte ist direkt lediglich mit einem einzigen der drei Sammelschienen-Gehäuseabschnitte fluid verbunden.

Gemäß einem Aspekt sind die Abgangsleiter-Gehäuseabschnitte zylinderabschnitt-artig gestaltet und weisen ein zylinderartiges Innenvolumen auf. Die Abgangsleiter-Gehäuseabschnitte sind voneinander beabstandet. Der Abstand zwischen ihren Zylinderachsen bzw. Mitten ist größer als der Zylinder-Außendurchmesser bzw. als der doppelte Krümmungs-Radius ihrer Wandabschnitte. Gemäß einem Aspekt sind die Abgangsleiter-Gehäuseabschnitte in gleichmäßigem Abstand voneinander entfernt entlang der zweiten Gerade angeordnet. Gemäß einem Aspekt erstrecken sich die Zylinder-Achsen der Abgangsleiter-Gehäuseabschnitte in x-Richtung. Gemäß einem Aspekt sind jeweilige geschlossene Abschluss-Stücke an einer jeweiligen Stirnseite der Abgangsleiter-Gehäuseabschnitte angebracht.

Gemäß einem Aspekt umfasst die Abgangsleiter-Anschlussgruppe für jede der drei Abgangsleiter-Öffnungen je einen die jeweilige Abgangsleiter-Öffnung umfangsmäßig umgebenden Flansch, wobei der Flansch optional von einem Bereich hinter der Abgangsleiter-Öffnung und außerhalb des Gehäuses aus zugänglich ist. Gemäß einem Aspekt sind die Abgangsleiter-Öffnungen jeweils zu einer zur ersten und zweiten Geraden senkrecht stehenden Richtung hin gerichtet bzw. zu einer zu der zweiten Öffnungs-Ebene senkrecht stehenden Richtung hin gerichtet. Gemäß einem Aspekt erstreckt sich die Normale der Abgangsleiter-Öffnungen in x-Richtung. Somit spannen die Abgangsleiter-Öffnungen eine Abgangs-Normalebene auf (von der zweiten Gerade und den zueinander parallelen Normalen der Öffnungen aufgespannte Ebene), so dass Nominalleiter, die die Abgangsleiter-Öffnungen zentral und senkrecht verlassen, in der Abgangs-Normalebene liegen. Die Abgangs-Normalebene kann eine x-y-Ebene sein.

Gemäß einem Aspekt schneidet die Abgangs-Normalebene eine von den Sammelschienen-Öffnungen entsprechend gebildete Sammelschienen-Normalebene in einer Schnittlinie, die gegenüber jeder der Mittelachsen der Sammelschienen-Öffnungen in z-Richtung versetzt ist. Insbesondere ist die Schnittlinie außerhalb der Sammelschienen-Öffnungen, insbesondere zwischen zwei der Sammelschienen-Öffnungen angeordnet.

Gemäß einem Aspekt sind die Abgangsleiter-Öffnungen von Flanschen umgeben. Die Flansche liegen in einer gemeinsamen Ebene, z.B. einer y-z-Ebene. Jede der drei Abgangsleiter-Öffnungen weist einen eigenen separaten Flansch auf. Der Flansch ist insbesondere mit einer Befestigungseinrichtung für einen Schottisolator versehen. Die Befestigungseinrichtung umfasst insbesondere in dem Flansch gebildete Durchbrüche für Befestigungsschrauben.

Gemäß einem Aspekt weist das Gehäuse zumindest ein Durchbruch auf, welches ein von dem Gehäuse definiertes zusammenhängendes Innenvolumen durchstößt. Gemäß einem Aspekt durchstößt der Durchbruch auch die Außenhülle des Gehäuses. Gemäß einem Aspekt ist das Durchbruch zwischen zweien, insbesondere einem äußeren und einem mittleren, der Sammelschienen-Gehäuseabschnitte angeordnet. Das Durchbruch ist gemäß einem Aspekt zwischen zweien, insbesondere den beiden äußeren, der Abgangsleiter-Gehäuseabschnitte angeordnet. Gemäß einem Aspekt weist das Gehäuse insbesondere eine Vielzahl von Durchbrüchen, z.B. zwei oder drei Durchbrüche, auf.

Gemäß einem Aspekt umfasst das Gehäuse eine Kühlvorrichtung zum Erhöhen der Wärmeabfuhr aus dem Innenvolumen des Gehäuses. Gemäß einem Aspekt ist die Kühlvorrichtung an einem Abschluss-Stück des Abgangsleiter-Gehäuseabschnitts angeordnet, insbesondere an einem oberen Abschluss-Stück. Gemäß einem Aspekt umfasst das Gehäuse zumindest einen insbesondere zylinderartig geformten Betätigungswellen-Gehäuseabschnitt zur Aufnahme einer Betätigungswelle. Die Betätigungswelle ist für die Betätigung von im Innenvolumen des Gehäuses angeordnete bzw. anordenbare Schaltelemente ausgelegt. In Ausführungsformen erstreckt sich der Betätigungswellen-Gehäuseabschnitt entlang der drei Abgangsleiter-Gehäuseabschnitte und stellt ein direkt mit dem Inneren der Abgangsleiter-Gehäuseabschnitte in Verbindung stehendes Innenvolumen für eine sich entlang einer Geraden erstreckende Betätigungswelle zur Verfügung. Der Betätigungswellen-Gehäuseabschnitt kann sich entlang der drei Abgangsleiter-Gehäuseabschnitte erstrecken und ein direkt mit dem Inneren der Abgangsleiter-Gehäuseabschnitte in Verbindung stehendes Innenvolumen für eine gerade Betätigungswelle zur Verfügung stellen. Gemäß einem Aspekt erstreckt sich eine Zylinderachse des Betätigungswellen-Gehäuseabschnitts in y-Richtung bzw. parallel zur zweiten Geraden. Gemäß einem Aspekt ist der Betätigungswellen-Gehäuseabschnitt in x-Richtung versetzt gegenüber den Zylinderachsen der Sammelschienen-Gehäuseabschnitte angeordnet. Der Versatz beträgt insbesondere die Hälfte des Abstands der Zylinderachsen der Sammelschienen-Gehäuseabschnitte voneinander.

Gemäß einem Aspekt hat das Gehäuse Symmetrie-Eigenschaften. Gemäß diesem Aspekt sind die Menge der Öffnungen umfassend die ersten Sammelschienen-Öffnungen, die zweiten Sammelschienen-Öffnungen und die Abgangs-Öffnungen spiegelsymmetrisch zu einer Spiegel-Ebene angeordnet, und gemäß einem besonderen Aspekt ist die Spiegel-Ebene parallel zu der ersten Öffnungs-Ebene angeordnet. Gemäß einem weiteren Aspekt ist das Gehäuse im Wesentlichen spiegelsymmetrisch zu der Spiegel-Ebene aufgebaut. Im Wesentlichen spiegelsymmetrisch bedeutet eine Symmetrie bezüglich der Sammelschienen-und Abgangs-Öffnungen und bezüglich der Hauptgeometrie des Gehäuses, nicht aber bezüglich etwaiger Hilfsanschlüsse und sonstiger unwesentlicher Details. Quantitativ ausgedrückt, darf das bei Spiegelung nicht überlappende Volumen des Gasraums nicht mehr als 5% des gesamten Volumens des Gasraums betragen. Die Spiegel-Ebene verläuft bei einer Ausführungsform des Gehäuses durch eine mittlere Abgangsleiter-Öffnung, welche zwischen den zwei restlichen Abgangsleiter-Öffnungen angeordnet ist.

Gemäß einem Aspekt ist das Gehäuse für ein Schaltmodul einer Hochspannungs-Schaltanlage ausgelegt, also für Spannungen von mindestens 50 kV.

Gemäß einem Aspekt wird ein Schaltanlagenmodul umfassend irgendein hierin beschriebenes Gehäuse vorgeschlagen. Das Schaltanlagenmodul umfasst weiter einen Sammelschienen-Leiterabschnitt umfassend drei Sammelschienen-Phasenleiter, die sich jeweils von einer jeweiligen der ersten Sammelschienen-Anschlussöffnungen zu einer jeweiligen der zweiten Sammelschienen-Anschlussöffnungen erstrecken; und einen Abgangs-Leiterabschnitt umfassend drei Abgangs-Phasenleiter, die sich jeweils zu einer jeweiligen der zweiten Abgangs-Anschlussöffnungen erstrecken. Gemäß einem Aspekt umfasst das Schaltanlagenmodul weiter ein Trennschalter-System mit drei Trennschaltern, wobei jeder der drei Trennschalter einen elektrischen Kontakt zwischen einem jeweiligen der Sammelschienen-Phasenleiter und einem jeweiligen der Abgangs-Phasenleiter schaltet. Gemäß einem Aspekt umfasst das Trennschalter-System ein Betätigungssystem zur gemeinsamem Betätigung der drei Trennschalter. Gemäß einem Aspekt umfasst das Betätigungssystem eine Betätigungswelle. In Ausführungsformen erstreckt sich die Betätigungswelle entlang des Betätigungswellen-Gehäuseabschnitts. Gemäß einem Aspekt erstrecken die Sammelschienen-Phasenleiter sich zumindest im Bereich der ersten und der zweiten Sammelschienen-Öffnungen in einer Sammelschienen-Ebene (y-z-Ebene bzw. die Ebene, die die erste Gerade enthält und die senkrecht auf der ersten Öffnungs-Ebene steht). Gemäß einem Aspekt erstrecken die Abgangs-Phasenleiter sich zumindest im Bereich der Abgangsleiter-Öffnungen in einer Abgangs-Normalebene (x-y-Ebene bzw. die Ebene, die die zweite Gerade enthält und die senkrecht auf der zweiten Öffnungs-Ebene steht).

Gemäß einem Aspekt wird ein Schaltfeld umfassend irgendein hierin beschriebenes Schaltanlagenmodul vorgeschlagen. Gemäß einem Aspekt umfasst das Schaltfeld weiter: einen Sammelschienen-Leiterabschnitt umfassend drei Sammelschienen-Phasenleiter, die sich jeweils von einer jeweiligen der ersten Sammelschienen-Anschlussöffnungen zu einer jeweiligen der zweiten Sammelschienen-Anschlussöffnungen erstrecken; und einen Abgangs-Leiterabschnitt umfassend drei Abgangs-Phasenleiter, die sich jeweils zu einer jeweiligen der zweiten Abgangs-Anschlussöffnungen erstrecken. Gemäß einem Aspekt umfasst das Schaltfeld weiter: ein Trennschalter-System mit drei öffenbaren Trennschaltern, wobei jeder der drei Trennschalter einen elektrischen Kontakt zwischen einem jeweiligen der Sammelschienen-Phasenleiter und einem jeweiligen der Abgangs-Phasenleiter herstellt.

Gemäß einem Aspekt wird eine Schaltanlage (Unterstation) umfassend irgendein hierin beschriebenes Schaltanlagenmodul vorgeschlagen. Die Schaltanlage umfasst weiter zumindest eine Sammelschiene, wobei der Sammelschienen-Leiterabschnitt einen Längsabschnitt der Sammelschiene bildet. Gemäß einem Aspekt ist die Sammelschiene zumindest abschnittsweise einphasig gekapselt. Gemäß einem Aspekt sind die Abgangs-Nominalleiter zumindest abschnittsweise einphasig gekapselt. Gemäß einem Aspekt erstrecken sich die Sammelschienen-Leiter jeweils in y-Richtung, so dass die Sammelschiene eine y-z-Ebene aufspannt. Gemäß einem Aspekt erstrecken sich die Abgangs-Nominalleiter in einer zur y- und z-Richtung senkrechte x-Richtung, so dass die Abgangsleiter eine x-y-Ebene aufspannen. Gemäß einem Aspekt wird eine Schaltanlage vorgeschlagen, die ein Schaltanlagenmodul gemäß irgendeiner der hierin beschriebenen Ausführungsformen und Aspekte und zumindest eine (gasisolierte gekapselte) Sammelschiene umfasst, wobei die Sammelschiene den Sammelschienen-Leiterabschnitt umfasst bzw. die Sammelschienen-Leiterabschnitte mit dem zugehörigen Sammelschienen-Gehäuseabschnitt einen Längsabschnitt der Sammelschiene bilden. Gemäß einem Aspekt erstreckt sich die Sammelschiene über mindestens zwei (je nach Ausführungsform benachbarte) Schaltanlagenmodule gemäß irgendeiner der hierin beschriebenen Ausführungsformen.

Die Angabe, dass das Gehäuse drei Abgangsleiter-Öffnungen umfasst, schließt nicht aus, dass es noch weitere Abgangsleiter-Öffnungen umfasst, z.B. insgesamt vier oder sechs Abgangsleiter-Öffnungen. Soweit nicht ausdrücklich anders angegeben, bedeutet eine Zahlenangabe somit eine Mindestzahl. Gemäß einem besonderen Teil-Aspekt ist jedoch genau diese Zahl gemeint. Gemäß diesem Teil-Aspekt bedeutet z.B. "drei Abgangsleiter-Öffnungen" dann "genau drei Abgangsleiter-Öffnungen". Entsprechendes gilt in Bezug auf die Anzahl der Abgangsleiter und der ersten und zweiten Sammelschienen-Öffnungen und - Leiter.

Im Weiteren soll die Erfindung anhand von in Figuren dargestellten Ausführungsbeispielen erläutert werden, aus denen sich weitere Vorteilteile und Abwandlungen ergeben. Dazu zeigen:
Fig. 1a und 1b zeigen jeweils eine perspektivische Ansicht eines Schaltanlagenmodul-Gehäuses gemäß einer Ausführungsform der Erfindung;
Fig. 2a und 2b zeigen weitere frontale bzw. seitliche Ansichten des Schaltanlagenmodul-Gehäuses;
Fig. 3a bis 3c zeigen seitliche Querschnitte des Schaltanlagenmodul-Gehäuses;
Fig. 4a zeigt eine Ansicht des Schaltanlagenmodul-Gehäuses von oben;
Fig. 4b zeigt eine horizontale Querschnitts-Ansicht des Schaltanlagenmodul-Gehäuses; und
Fig. 5 zeigt ein Teil eines Schaltanlagenmodul-Gehäuses gemäß einer weiteren Ausführungsform der Erfindung.

Im Allgemeinen und nicht beschränkt auf die vorliegende Ausführungsform werden nun einzelne Ausführungsformen mit Bezug auf die Figuren beschrieben. Die Klarheit der Figuren wird erreicht, indem auf eine Schraffur der Schnittflächen in den Schnittdarstellungen zugunsten der Übersichtlichkeit situativ verzichtet worden ist. Zwecks einer besseren Verständlichkeit der Beschreibung sollen sich die Begriffe "obere", "untere", "linke", "rechts", "vorne", "horizontal", "vertikal" sowie Abwandlungen davon lediglich bezüglich den in den Figuren dargestellten Ausrichtungen der Gegenstände beziehen.

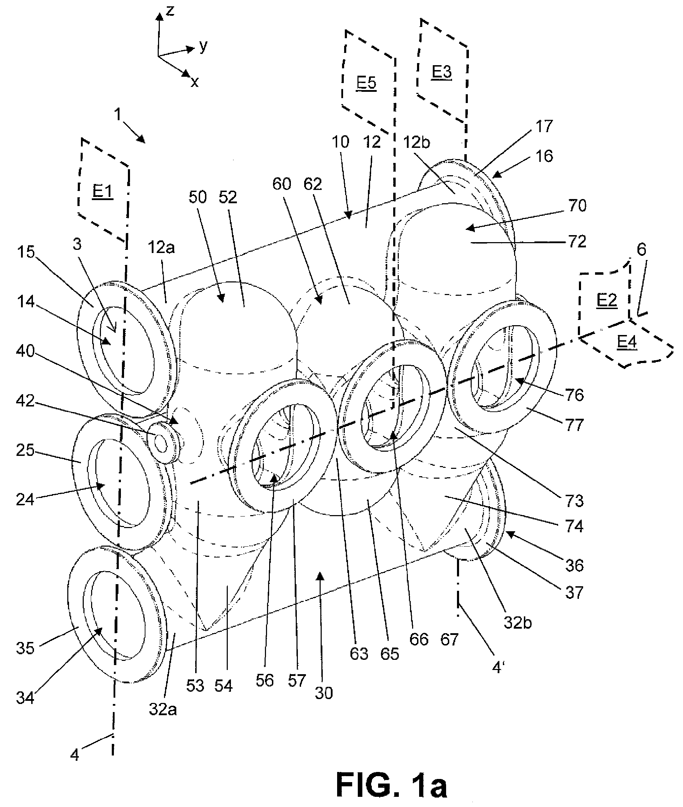

Fig. 1a bis 4b zeigen verschiedene Ansichten eines Schaltanlagenmodul-Gehäuses 1 gemäß einer repräsentativen Ausführungsform der Erfindung. Das Gehäuse 1 wird im Folgenden unter Bezugnahme auf diese Figuren gemeinsam beschrieben, unter Verwendung des ebenfalls in den Figuren dargestellten orthogonalen x-y-z-Koordinatensystems.

Das Schaltanlagenmodul-Gehäuse 1 weist drei Sammelschienen-Gehäuseabschnitte 10, 20, 30 auf. Der obere Sammelschienen-Gehäuseabschnitt 10 erstreckt sich längs in y-Richtung von einer oberen ersten Sammelschienen-Öffnung 14 zu einer oberen, zweiten Sammelschienen-Öffnung 16. Der obere Sammelschienen-Gehäuseabschnitt 10 weist einen mittleren rohrförmigen Gehäuseabschnitt 12 und zwei endseitig angeordnete Rohrstummel 12a und 12b, eine obere erste Sammelschienen-Öffnung 14, eine obere zweite Sammelschienen-Öffnung 16, einen die obere erste Sammelschienen-Öffnung 14 umgebenden Flansch 15, und einen die obere zweite Sammelschienen-Öffnung 16 umgebenden Flansch 17 auf.

Auch der mittlere und der untere Sammelschienen-Gehäuseabschnitt 20 bzw. 30 erstrecken sich in y-Richtung zwischen entsprechenden mittleren bzw. unteren ersten und zweiten Sammelschienen-Öffnungen 24 und 26 bzw. 34 und 36, und weisen jeweils zylinderartige Gehäuseabschnitte (z.B. Gehäuseabschnitt 32), Rohrstummel 22a und 22b bzw. 32a und 32b sowie Flansche 25 und 27 bzw. 35 und 37 auf, die die jeweiligen Sammelschienen-Öffnungen 24 und 26 bzw. 34 und 36 umgeben. Die Beschreibung des oberen Sammelschienen-Gehäuseabschnitts 10 und seiner Komponenten gilt für die Sammelschienen-Gehäuseabschnitte 20 und 30 entsprechend. Die Zylinderachsen der Gehäuseabschnitte 11, 21 und 31 erstrecken sich parallel zueinander in y-Richtung. Die Zylinderachsen sind in z-Richtung übereinander angeordnet, so dass sie gemeinsam in einer y-z-Ebene liegen.

Die jeweiligen Sammelschienen-Öffnungen 14, 16 bzw. 24, 26 bzw. 34, 36 sind konzentrisch zur jeweiligen Zylinderachse an einander gegenüberliegenden Stirnflächen der jeweiligen Gehäuseabschnitte 11, 21, 31 angeordnet. Die auf der einen Seite des Gehäuses angeordneten Sammelschienen-Öffnungen 14, 24 und 34 (auch als erste Sammelschienen-Öffnungen bezeichnet) bilden eine erste Sammelschienen-Anschlussgruppe. Entsprechend bilden die auf der gegenüberliegenden Seite des Gehäuses angeordneten Sammelschienen-Öffnungen 16, 26 und 36 (auch als zweite Sammelschienen-Öffnungen bezeichnet) eine zweite Sammelschienen-Anschlussgruppe.

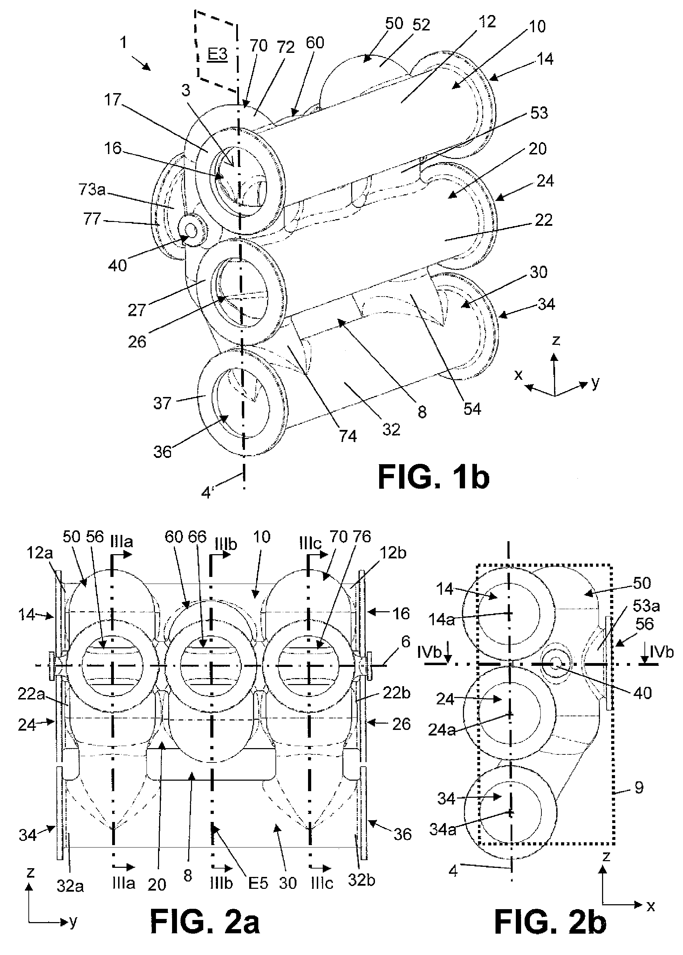

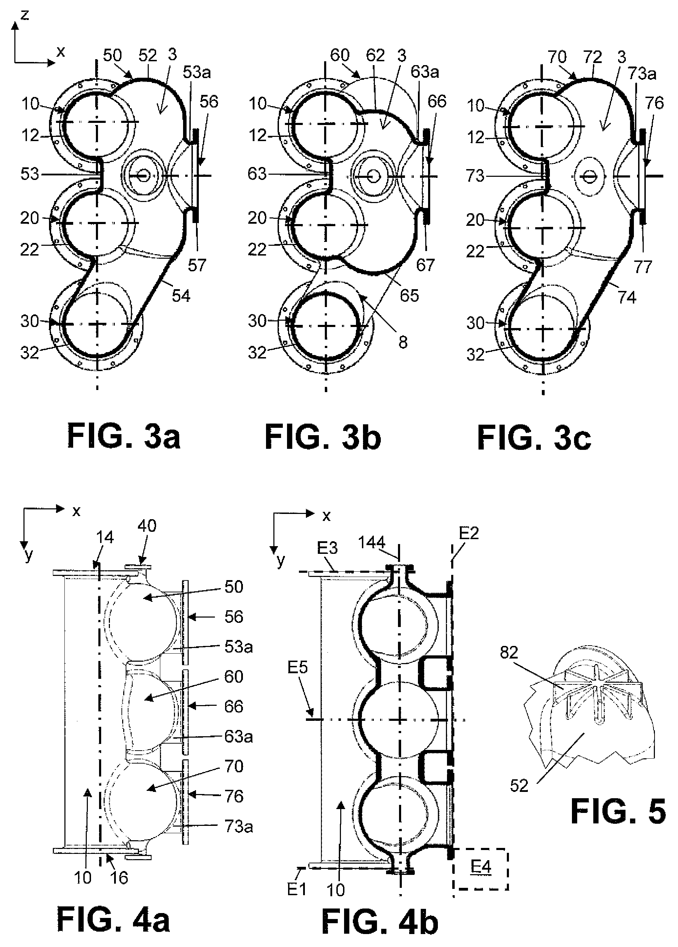

Das Schaltanlagenmodul-Gehäuses 1 weist weiter einen zylinderartigen Betätigungswellen-Gehäuseabschnitt 40 auf Der Betätigungswellen-Gehäuseabschnitt 40 ist konzentrisch zu einer Zylinderachse bzw. Betätigungsachse 144 gestaltet (siehe Fig. 4b), die parallel zu der zweiten Gerade 6 verläuft. Der Betätigungswellen-Gehäuseabschnitt 40 weist weiter ein hervorstehendes Betätigungswellen-Endstück 42 auf, um im Betrieb des Gehäuses 1 die Betätigung von im Gasraum 3 angeordneten Schaltelementen zu ermöglichen. Das Betätigungswellen-Endstück 42 ist konzentrisch zur Zylinderachse bzw. Betätigungsachse 144 des Betätigungswellen-Gehäuseabschnitts 40 an dessen Stirnfläche angebracht. Wie in Fig. 1b sichtbar ist, ist auch an der gegenüberliegenden Stirnfläche ein entsprechendes Betätigungswellen-Endstück dargestellt. Beide Betätigungswellen-Endstücke sind geschlossen. In anderen Ausführungsformen weist zumindest eines dieser Betätigungswellen-Endstücke eine Betätigungswellen-Öffnung auf, durch die die Betätigungswelle aus dem Gehäuse herausgeführt wird oder eine Antriebswelle für die Betätigungswelle in das Gehäuse hineingeführt wird. An dem Betätigungswellen-Endstück 42 sind Befestigungsmittel zur Befestigung einer Betätigungsvorrichtung zum Antrieb der Betätigungswelle angebracht (nicht dargestellt).

Das Schaltanlagenmodul-Gehäuses 1 weist weiter eine Abgangsleiter-Anschlussgruppe auf. Die Abgangsleiter-Anschlussgruppe hat einen ersten Leiterabgangs-Gehäuseabschnitt 50 mit einem sich in z-Richtung erstreckenden zylinderartigen Gehäuseabschnitt 53, der nach oben von einem Oberen Endstück 52 und nach unten von einem Übergangs-Stück 54 begrenzt wird. Ein zylinderartiger Rohrstummel 53a erstreckt sich seitlich in x-Richtung (Richtung der Zylinderachse des Rohrstummels) von dem zylinderartigen Gehäuseabschnitt 53 weg. Unter einem Rohrstummel wird ein rohrförmiges Endstück verstanden, wobei rohrförmig bedeutet, dass das Stück ein Hohlprofil aufweist. Der Rohrstummel 53a mündet in einer Abgangsleiter-Öffnung 56. Die Abgangsleiter-Öffnung 56 weist einen Flansch 57 auf, der sie umgibt.

In entsprechender Weise hat die Abgangsleiter-Anschlussgruppe auch einen zweiten und dritten Leiterabgangs-Gehäuseabschnitt 60, 70, die jeweils einen zylinderartigen Gehäuseabschnitt 63 bzw. 73 und ein jeweiliges Oberes Endstück 62 bzw. 72 aufweisen. Jeweilige Rohrstummel 63a bzw. 73a erstrecken sich seitlich in x-Richtung von den jeweiligen zylinderartigen Gehäuseabschnitten 63 bzw. 73 weg und münden in jeweiligen Abgangsleiter-Öffnungen 66 bzw. 76. Die Abgangsleiter-Öffnungen 66 bzw. 76 sind von jeweiligen Flanschen 67 bzw. 77 umgeben. Während der dritte Leiterabgangs-Gehäuseabschnitt 70 ebenfalls ein Übergangs-Stück 74 entsprechend dem ersten Übergangs-Stück 54 aufweist, fehlt dem zweiten Leiterabgangs-Gehäuseabschnitt 60 ein solches Übergangs-Stück. Stattdessen wird der zweite Leiterabgangs-Gehäuseabschnitt 60 nach unten von einem unteren Endstück 65 begrenzt.

Im Folgenden werden die Anordnung und einige Eigenschaften der verschiedenen Teile des in Fig. 1a und 1b gezeigten Schaltanlagenmoduls beschrieben. Einzelne Aspekte dieser Beschreibung stellen allgemeine Aspekte der Erfindung dar, gemäß denen unabhängig von den Details des in Fig. 1a und 1b gezeigten Schaltanlagenmoduls auch weitere Ausführungsformen gestaltet werden können. Zunächst werden die die Anordnung und einige Eigenschaften der Sammelschienen-Gehäuseabschnitte 10, 20, 30 und ihrer Teile beschrieben.

Die Sammelschienen-Öffnungen 14, 24 und 34 (auch als erste Sammelschienen-Öffnungen bezeichnet) sind flächenmäßig in einer ersten Öffnungs-Ebene E1 angeordnet. Dies bedeutet, dass die von den Umrandungen der drei ersten Sammelschienen-Öffnungen 14, 24 und 34 definierten jeweiligen Öffnungs-Flächen jeweils flächenmäßig in der ersten Öffnungs-Ebene E1 liegen. Diese Öffnungs-Ebene E1 ist eine x-z-Ebene, d.h. eine sich in x-und z-Richtung erstreckende Ebene. Die Sammelschienen-Öffnungen 14, 24 und 34 sind weiter entlang einer ersten Geraden 4 angeordnet, d.h. jeweilige Mitten 14a, 24a, 34a der Öffnungen 14, 24, 34 (bzw. ihrer Öffnungs-Flächen) liegen auf dieser ersten Geraden 4, wie etwa in Fig. 2b besonders gut sichtbar ist.

Die drei zweiten Sammelschienen-Öffnungen 16, 26 und 36 sind auf einer den drei ersten Sammelschienen-Öffnungen 14, 24, 34 direkt gegenüberliegenden Seite des Gehäuses angeordnet. Die zweiten Sammelschienen-Öffnungen 16, 26 und 36 sind flächenmäßig in einer weiteren Ebene E3 angeordnet. Die Ebene E3, auch als dritte Öffnungs-Ebene bezeichnet, ist ebenfalls eine x-z-Ebene und somit parallel zur ersten Öffnungs-Ebene E1. Die zweiten Sammelschienen-Öffnungen 16, 26 und 36 sind ferner entlang einer dritten Geraden 4`, die parallel zur ersten Gerade 4 verläuft, angeordnet.

Die ersten Sammelschienen-Öffnungen 14, 24, 34 sind jeweils zur y-Richtung hin gerichtet, d.h. ihre Normale (Normale zur Öffnungs-Ebene) erstreckt sich in y-Richtung. Die ersten Sammelschienen-Öffnungen 14, 24, 34 definieren eine erste Sammelschienen-Normalebene (y-z-Ebene), die von der ersten Gerade 4 und den zueinander parallelen Normalen der Öffnungen 14, 24, 34 aufgespannt wird, so dass diese Normalen allesamt in der Sammelschienen-Normalebene liegen. Anders ausgedrückt sind die ersten Sammelschienen-Öffnungen 14, 24, 34 so angeordnet, dass Sammelschienen-Leiter, die die Öffnungen zentral und senkrecht (d.h. parallel zu der Normalen) verlassen, in dieser Sammelschienen-Normalebene liegen. Die von den zweiten Sammelschienen-Öffnungen 16, 26, 36 in entsprechender Weise definierte zweite Sammelschienen-Normalebene ist mit der von den ersten Sammelschienen-Öffnungen 14, 24, 34 definierten Sammelschienen-Normalebene identisch, nämlich die y-z-Ebene, die die Geraden 4 und 4' enthält. Somit können in dieser Sammelschienen-Normalebene liegende Sammelschienen-Leiter das Gehäuse 1 geradlinig durchtreten.

Eine jede der drei zweiten Sammelschienen-Öffnungen 16, 26, 36 ist paarweise gegenüber einer jeweiligen der drei ersten Sammelschienen-Öffnungen 14, 24, 34 angeordnet. Dadurch werden drei Sammelschienen-Öffnungs-Paare (14, 16), (24, 26) und (34, 36) gebildet, zwischen denen jeweils einer der Sammelschienen-Gehäuseabschnitte 10, 20 bzw. 30 liegt. Diese Anordnung ermöglicht die Aufnahme eines jeweiligen durchgehenden geraden Sammelschienen-Leiterabschnitts zwischen den Sammelschienen-Öffnungen des jeweiligen Paars. Der Sammelschienen-Leiterabschnitt erstreckt sich in y-Richtung, d.h. senkrecht zur ersten und zur dritten Öffnungs-Ebene E1 und E3.

Die Sammelschienen-Gehäuseabschnitte 10, 20, 30 definieren jeweilige zylinderartige Innenvolumen oder Gasraumabschnitte. Die Innenvolumen sind Teil des gemeinsamen Gasraums und stehen mit dessen weiteren Teilen und miteinander in fluider (hydraulischer) Verbindung. Da das Gehäuse zur Aufnahme eines Isoliergases dient, wird nachfolgend unter fluid' auch ein Gas verstanden. Die jeweiligen Zylinder-Achsen dieser Innenvolumens erstrecken sich in y-Richtung. Die jeweiligen Zylinder-Achsen sind insbesondere durch die rohrförmigen Längsabschnitte 12, 22, 32 und die Rohrstummel 12a, 12b, 22a, 22b und 32a, 32b definiert, die konzentrisch zu den jeweiligen Zylinder-Achsen angeordnet sind. Jedes der drei Sammelschienen-Öffnungs-Paare (14, 16), (24, 26) und (34, 36) begrenzt somit einen sich dazwischen erstreckenden, zylinderförmigen Gasraumabschnitt des Gasraums stirnseitig. Die zylinderartigen Gasraumabschnitte (mit zumindest abschnittsweise im Wesentlichen kreisförmigem Querschnitt) erstrecken sich jeweils entlang der jeweiligen Zylinder-Achse. In alternativen Ausführungsformen (nicht dargestellt) kann der Querschnitt der Gasraumabschnitte auch oval oder ungleichförmig sein. In diesem weisen die Sammelschienen-Gehäuseabschnitte 10, 20, 30 und deren Gasraumabschnitte statt einer Zylinder-Achse eine gerade Längsachse auf.

Die Sammelschienen-Gehäuseabschnitte 10, 20 und 30 sind voneinander beabstandet angeordnet. Dies bedeutet, dass der Abstand zwischen den Zylinderachsen größer ist als der Zylinder-Durchmesser bzw. als der doppelte Krümmungs-Radius der Sammelschienen-Gehäuseabschnitte 10, 20 bzw. 30. Der Zylinder-Durchmesser bzw. Krümmungs-Radius ist durch die Gehäuse-Außenseite vorgegeben. Die drei Sammelschienen-Gehäuseabschnitte 10, 20, 30 sind in einem gleichmäßigen Abstand zueinander entlang der ersten Gerade 4 in z-Richtung aufgereiht.

Die drei ersten Sammelschienen-Öffnungen 14, 24, 34 dienen zur separaten Aufnahme von jeweils einem von drei gasisolierten Sammelschienen-Leiterabschnitten der Schaltanlage. Ebenso dienen die drei zweiten Sammelschienen-Öffnungen 16, 26, 36 zur separaten Aufnahme jeweils eines der drei Sammelschienen-Leiterabschnitte. Die Sammelschienen-Öffnungen könnte man daher auch als Sammelschienen-Leiter-Öffnungen bezeichnen. Unter separater Aufnahme ist hierbei zu verstehen dass die Sammelschienen-Leiter jeweils einphasig in den jeweiligen Öffnungen angeordnet sind, insbesondere durch einen einphasigen Isolator durchführend angeordnet sind.

Die Sammelschienen-Öffnungen 14, 16, 24, 26, 34 und 36 sind jeweils an einer Stirnfläche eines jeweiligen separaten, also eigens zugeordneten Rohrstummels 12a, 12b, 22a, 22b, 32a bzw. 32b angeordnet und über diesen mit einer Hauptkammer des gemeinsamen Gasraums verbunden. Die Rohrstummel sind voneinander beabstandet, d.h. nicht miteinander verschmolzen.

Die Sammelschienen-Öffnungen 14, 24, 34 und 16, 26 und 36 sind umfangsmäßig von jeweiligen Flanschen 15, 25, 35 und 17, 27, 37 umgeben. Die Flansche sind durch Rohrstummel 12a, 12b, 22a, 22b, 32a, 32b von einem Wandabschnitt der Hauptkammer beabstandet und als eigenständige Flansche gestaltet. Jede der Sammelschienen-Öffnungen weist einen eigenen separaten Flansch auf, d.h. die Flansche sind voneinander beabstandet. Die Flansche 15, 25, 35 liegen in einer gemeinsamen Ebene, der ersten Öffnungs-Ebene E1. Ebenso liegen die Flansche 17, 27, 37 in einer gemeinsamen Ebene, der dritten Öffnungs-Ebene E3. Wie in Fig. 3a bis 3c zu sehen ist, ist jeder der Flansche mit Schraubenlöchern für Befestigungsschrauben versehen, mit deren Hilfe ein Schott-Isolator oder ein Stütz-Isolator an dem jeweiligen Flansch befestigt werden kann. Je nach Anforderungen ist das Schraubenloch als Durchgangsloch oder als Gewindeloch realisiert. In den weiteren Figuren sind diese Schraubenlöcher vereinfachend nicht dargestellt, jedoch sind in allen Flanschen 15, 25, 35, 17, 27, 37 und 57, 67, 77 (siehe unten) solche Schraubenlöcher vorhanden, selbst wenn diese in einigen Figuren nicht dargestellt sind. Schott-Isolatoren, durch sie durchtretende Leiter, und weitere solche Elemente gehören nicht zum Gehäuse im engeren Sinne und sind in den Fig. 1 bis 4b nicht dargestellt. Diese Elemente sind in Fig. 6 dargestellt und weiter unten mit Bezug auf Fig. 6 detaillierter beschrieben.

Jeder der Flansche 15, 25, 35 ist am Ende eines jeweiligen der Rohrstummel 12a, 22a bzw. 32a angebracht und steht seitlich von dem jeweiligen Rohrstummel ab. Dadurch ist jeder der Flansche 15, 25, 35 von außerhalb des Gehäuses aus zugänglich, von einem Bereich hinter der jeweils zugehörigen Öffnung 14, 24, 34 aus. Dadurch sind die Befestigungsvorrichtungen für die Schott-Isolatoren von außerhalb des Gehäusevolumens zugänglich, und eine einfache Montage, Demontage und Wartung des Gehäuses 1 wird ermöglicht. Das oben Gesagte gilt entsprechend auch für die zweiten Sammelschienen-Öffnungen 16, 26, 36 (am Ende eines jeweiligen Rohrstummels 12b, 22b bzw. 32b angebracht) und für deren Flansche 17, 27, 37.

Im Folgenden werden die Anordnung und einige Eigenschaften der Abgangsleiter-Anschlussgruppe mit den Abgangsleiter-Öffnungen 56, 66, 76 und den Abgangsleiter-Gehäuseabschnitten 50, 60, 70 beschrieben. Die Abgangsleiter-Öffnungen 56, 66, 76 dienen zur separaten Aufnahme von jeweils einem von drei Abgangs-Leitern, genauer Abgangs-Nominalleitern der Schaltanlage. Die Abgangsleiter-Öffnungen 56, 66, 76 sind flächenmäßig in einer zweiten Öffnungs-Ebene E2 und entlang einer zweiten Gerade 6 angeordnet. Diese zweite Gerade 6 verläuft senkrecht zu den Geraden 4 und 4'. Die drei Abgangsleiter-Öffnungen 56, 66, 76 sind an einem jeweiligen der drei Abgangsleiter-Gehäuseabschnitte 50, 60, 70 angeordnet.

Die Abgangsleiter-Öffnungen 56, 66, 76 sind jeweils zur x-Richtung hin gerichtet, d.h. zu der zu den Geraden 4 und 6 senkrechten Richtung. Mit anderen Worten, die Normale der Abgangsleiter-Öffnungen 56, 66, 76 erstreckt sich in die x-Richtung. Somit definieren die Abgangsleiter-Öffnungen 56, 66, 76 eine Abgangs-Normalebene E4 (x-y-Ebene), die die zweite Gerade 6 enthält und die senkrecht auf der zweiten Öffnungs-Ebene E2 steht. Die Abgangs-Normalebene E4 ist somit die von der zweiten Gerade 6 und den zueinander parallelen Normalen der Abgangsleiter-Öffnungen 56, 66, 76 aufgespannte Ebene E4. Abgangs-Nominalleiter, die die Abgangsleiter-Öffnungen 56, 66, 76 zentral und senkrecht verlassen, liegen somit in der Abgangs-Normalebene E4. Die Abgangs-Normalebene E4 kann auch auf andere Weise definiert werden, z.B. als die Ebene, die senkrecht zur ersten Gerade 4 steht und die zweite Gerade 6 enthält. Allgemeiner wird hierin unter einer Abgangs-Normalebene nicht nur die Ebene E4 verstanden, sondern jede von den zueinander parallelen Normalen der Abgangsleiter-Öffnungen 56, 66, 76 aufgespannte Ebene, d.h. jede Ebene, die parallel zur Ebene E4 ist.

Die Abgangs-Normalebene E4 schneidet die weiter oben definierte Sammelschienen-Normalebene in einer Schnittlinie, die gegenüber jeder der Mittelachsen der Sammelschienen-Öffnungen 14, 24, 34 bzw. der zylinderartigen Sammelschienen-Gehäuseabschnitte 12, 22,32 in Richtung der ersten Geraden 4 (z-Richtung) versetzt ist. Die Schnittlinie ist zwischen zwei der Sammelschienen-Öffnungen 14, 24, 34 und somit außerhalb der Sammelschienen-Öffnungen 14, 24, 34 angeordnet. Die Abgangs-Normalebene ist mittig zwischen der Sammelschienen-Öffnung 14 und der Sammelschienen-Öffnung 24 angeordnet. Die Vorteile dieser Anordnung sind weiter unten in Bezug auf Fig. 6 beschrieben.

Jede der drei Abgangsleiter-Öffnungen 56, 66, 76 ist umfangseitig/ umfangsmäßig von einem jeweiligen Flansch 57, 67, 77 umgeben. Die Flansche sind am Ende eines jeweiligen der Rohrstummel 53a, 63a bzw. 73a angeordnet und liegen in einer gemeinsamen Ebene, der zweiten Öffnungs-Ebene E2 (y-z-Ebene). Abgesehen von diesem Unterschied und weiteren aus den Figuren 1 bis 4b ersichtlichen Unterschieden gilt für die Abgangsleiter-Öffnungen 56, 66, 76, die Rohrstummel 53a, 63a, 73a und die Flansche 57, 67, 77 das weiter oben für die entsprechenden Teile der ersten Sammelschienen-Öffnungen Geschriebene entsprechend.

In alternativen Ausführungsformen (nicht dargestellt) sind die Flansche der ersten Sammelschienen-Öffnungen und / oder der zweiten Sammelschienen-Öffnungen und / oder der Abgangsleiter-Öffnungen je nach Ausführungsform in einen gemeinsamen Wandabschnitt einer Hauptkammer des Gehäuses vollintegriert oder teilintegriert. Je nach Ausführungsform sind zumindest zwei der Flansche der ersten Sammelschienen-Öffnungen und / oder der zweiten Sammelschienen-Öffnungen und / oder der Abgangsleiter-Öffnungen zumindest zwei der Flansche miteinander zu einer Flansch-Gruppe verbunden. Beispielsweise können alle Flansche der ersten Sammelschienen-Öffnungen und / oder der zweiten Sammelschienen-Öffnungen und / oder der Abgangs-Öffnungen miteinander zu einer jeweiligen ersten Sammelschienen-Flansch-Gruppe und / oder zweiten Sammelschienen-Flansch-Gruppe und / oder Abgangs-Flansch-Gruppe verbunden sein.

Der Abgangsleiter-Gehäuseabschnitt 50 ist wurstartig geformt und umfasst einen zylindrischen Gehäuseabschnitt 53 mit sich in z-Richtung erstreckender Zylinderachse. Weiter umfasst der Abgangsleiter-Gehäuseabschnitt 50 ein abgerundetes oberes Endstück 52, das als Abschluss-Stück an einer oberen Stirnseite des Abgangsleiter-Gehäuseabschnitts 50 angebracht ist, und an der diesem gegenüberliegenden Stirnseite ein rohrartiges Übergangsstück 54. Der Abgangsleiter-Gehäuseabschnitt 50 weist zumindest abschnittsweise (nämlich im Abschnitt des Gehäuseabschnitts 53) ein zylinderartiges Innenvolumen auf. Der Abgangsleiter-Gehäuseabschnitt 50 ist so mit den Sammelschienen-Gehäuseabschnitten 10, 20, 30 verschmolzen, dass er deren Innenvolumina miteinander verbindet, wie in Fig. 3a genauer zu sehen ist. Der Abgangsleiter-Gehäuseabschnitt 70 ist entsprechend dem Abgangsleiter-Gehäuseabschnitt 50 gestaltet.

Der mittig angeordnete Abgangsleiter-Gehäuseabschnitt 60 ist ebenfalls größtenteils entsprechend dem Abgangsleiter-Gehäuseabschnitt 50 gestaltet, weist aber folgende Unterschiede auf: Statt einem Übergangsstück weist der Abgangsleiter-Gehäuseabschnitt 60 auch ein abgerundetes unteres Ende 65 auf. Der Abgangsleiter-Gehäuseabschnitt 50 ist daher so mit den Sammelschienen-Gehäuseabschnitten 10, 20 verschmolzen, dass er deren Innenvolumina direkt miteinander verbindet, wie in Fig. 3b genauer zu sehen ist. Von dem Sammelschienen-Gehäuseabschnitt 30 ist der Abgangsleiter-Gehäuseabschnitt 60 dagegen beabstandet (durch den Durchbruch 8 getrennt) und hat also keine direkte Verbindung mit ihm. Insgesamt verbinden die Abgangsleiter-Gehäuseabschnitte 50, 70 somit die Innenvolumina der drei Sammelschienen-Gehäuseabschnitte 10, 20, 30 direkt miteinander, und der Abgangsleiter-Gehäuseabschnitt 60 verbindet die Innenvolumina von zweien der Sammelschienen-Gehäuseabschnitte 10 und 20 direkt miteinander.

In alternativen Ausführungsformen (nicht dargestellt) können die Abgangsleiter-Gehäuseabschnitte 50, 60, 70 auch andere Längen und Anordnungen in z-Richtung aufweisen, so dass sie andere Kombinationen der Sammelschienen-Gehäuseabschnitte direkt miteinander verbinden. Beispielsweise ist in einer solchen alternativen Ausführungsform der Abgangsleiter-Gehäuseabschnitt 70 an seinem unteren Ende so verkürzt, dass er lediglich mit dem obersten Sammelschienen-Gehäuseabschnitt 10 direkt fluidisch verbunden ist. Die übrigen Abgangsleiter-Gehäuseabschnitte 50, 60 sind wie in Fig. 1 bis 4b dargestellt, d.h. der Abgangsleiter-Gehäuseabschnitt 50 ist mit allen drei Sammelschienen-Gehäuseabschnitten 10, 20, 30 direkt fluid verbunden, und der Abgangsleiter-Gehäuseabschnitt 60 ist lediglich mit zweien der drei Sammelschienen-Gehäuseabschnitte, nämlich mit den Sammelschienen-Gehäuseabschnitten 10 und 20 direkt fluid verbunden.

Gemäß einer weiteren Alternative ist der Abgangsleiter-Gehäuseabschnitt 50 lediglich mit dem Sammelschienen-Gehäuseabschnitt 10, der Abgangsleiter-Gehäuseabschnitt 60 mit den drei Sammelschienen-Gehäuseabschnitten 10, 20, 30, und der Abgangsleiter-Gehäuseabschnitt 70 lediglich mit den Sammelschienen-Gehäuseabschnitten 10 und 20 direkt fluid verbunden.

Die Abgangsleiter-Gehäuseabschnitte 50, 60, 70 sind voneinander beabstandet. Der Abstand zwischen ihren Zylinderachsen ist größer als der Durchmesser bzw. der doppelte Krümmungsradius ihrer zylinderartigen Wandabschnitte. Genauer sind die Zylinderachsen der Abgangsleiter-Gehäuseabschnitte 50, 60, 70 in einem gleichmäßigem Abstand voneinander entfernt in Richtung der zweiten Gerade 6 angeordnet. Der Abstand ist gleich dem Abstand, in dem die Zylinderachsen der Sammelschienen-Gehäuseabschnitte 10, 20, 30 voneinander beabstandet sind. Aus diesem Grund wird der Abstand auch als Einheits-Abstand bezeichnet.

Im Folgenden werden die die Anordnung und einige Eigenschaften des Betätigungswellen-Gehäuseabschnitts 40 beschrieben: Der Betätigungswellen-Gehäuseabschnitt 40 ist zur Aufnahme einer Betätigungswelle für eine Betätigung von in dem Gasraum anordenbaren Schaltelementen geeignet bzw. vorgesehen. Der Betätigungswellen-Gehäuseabschnitt 40 ist zylinderartig, mit einer sich parallel zu den Sammelschienen-Gehäuseabschnitten 10, 20, 30 (d.h. in y-Richtung) erstreckenden Zylinderachse 144 geformt. Die Zylinderachse ist in der zweiten Ebene E2 angeordnet. Der Betätigungswellen-Gehäuseabschnitt 40 erstreckt sich entlang der drei Abgangsleiter-Gehäuseabschnitte 50, 60, 70 und quer zu diesen. Der Betätigungswellen-Gehäuseabschnitt 40 stellt ein Innenvolumen zur Aufnahme einer sich entlang der Zylinderachse 144 erstreckenden Betätigungswelle zur Verfügung. Das Innenvolumen des Betätigungswellen-Gehäuseabschnitts 40 steht direkt mit dem jeweiligen Inneren der Abgangsleiter-Gehäuseabschnitte 50, 60, 70 in Verbindung. Der Betätigungswellen-Gehäuseabschnitt ist in x-Richtung versetzt gegenüber den Zylinderachsen der Sammelschienen-Gehäuseabschnitte 11, 21, 31 angeordnet. Der Versatz beträgt die Hälfte des Abstands der Zylinderachsen der Sammelschienen-Gehäuseabschnitte 11, 21, 31 voneinander (jeweils Abstand von Mitte zu Mitte), d.h. des Einheits-Abstands.

Hinsichtlich des orthogonalen Bezugssystems (Koordinatensystems) wird die z-Richtung durch die Richtung der ersten Gerade 4 definiert. Die zur z-Richtung senkrechte y-Richtung wird sodann durch die zweite Gerade 6 definiert. Damit ist auch x-Richtung als die zur z- und y-Richtung senkrechte Richtung definiert.

Die zweite Gerade 6, entlang derer die Abgangsleiter-Öffnungen 56, 66, 76 angeordnet sind, ist gegenüber der ersten Gerade 4 in der x-Richtung versetzt, so dass sich die erste Gerade 4 und die zweite Gerade 6 nicht schneiden. Die dritte Gerade 4' verläuft parallel zur z-Richtung. Die erste Öffnungs-Ebene E1 erstreckt sich parallel zur x- und z-Richtung (x-z-Ebene). Die zweite Öffnungs-Ebene E2 erstreckt sich parallel zur y- und z-Richtung (y-z-Ebene). Die zweite Öffnungs-Ebene E2 ist somit senkrecht zur ersten Öffnungs-Ebene E1 angeordnet. Die zweite Gerade 6 verläuft senkrecht zu der ersten Öffnungs-Ebene E1 Die erste Gerade 4 verläuft parallel zu der zweiten Öffnungs-Ebene E2. Die Ebenen E1 bis E4 sind in Fig. 4b durch gestrichelte Linien dargestellt. Dabei verlaufen die Ebenen E1 bis E3 senkrecht zur Bildebene von Fig. 4b (in z-Richtung) und sind daher nur als die gestrichelte Linie sichtbar. Die Ebene E4 verläuft in der Bildebene von Fig. 4b. Zusätzlich ist auch die Betätigungs-Achse 144 in Fig. 4b als gestrichelte Linie dargestellt.

Für die Verwendbarkeit des Gehäuses 1 als Modul im Rahmen eines modularen Schaltanlagen-Konzepts ist das Gehäuse 1 in Bezug auf einen Einheits-Abstand des Moduls dimensioniert. Dieser Einheits-Abstand wird durch den gleichmäßigen Abstand definiert, in dem die jeweiligen Mitten der drei ersten Sammelschienen-Öffnungen 14, 24, 34 zueinander entlang der ersten Gerade 4 aufgereiht sind. Die jeweiligen Mitten der drei Abgangsleiter-Öffnungen 56, 66, 76 sind ebenfalls in dem Einheits-Abstand zueinander entlang der zweiten Gerade 6 aufgereiht. Die jeweiligen Mitten der drei zweiten Sammelschienen-Öffnungen 16, 26, 36 sind ebenfalls in dem Einheits-Abstand zueinander entlang einer dritten Gerade 4' aufgereiht.

Im Folgenden werden weitere allgemeine Eigenschaften des Gehäuses beschrieben. Das Innenvolumen des Gehäuses bildet einen zusammenhängenden Gasraum. Die Sammelschienen-Öffnungen 14, 24, 34 und 16, 26, 36 und die Abgangsleiter-Öffnungen 56, 66, 76 bilden jeweils einen separaten Zugang zum Gasraum von außerhalb des Gehäuses. Der Gasraum steht also mit den drei ersten und zweiten Sammelschienen-Öffnungen und mit den drei Abgangsleiter-Öffnungen in Verbindung. Der gemeinsame Gasraum dient unter anderem zur Aufnahme eines Isoliergases und von drei gasisolierten Sammelschienen-Leiterabschnitten. Die Sammelschienen-Öffnungen 14, 24, 34 und 16, 26, 36 und die Abgangsleiter-Öffnungen 56, 66, 76 sind derart gestaltet, dass sie einphasige Isolatoren (also Isolatoren zur Aufnahme lediglich eines einzigen Phasenleiters) aufzunehmen vermögen. Somit bildet das Gehäuse 1 einen zusammenhängenden Gasraum 3 zur dreiphasigen Kapselung der Sammelschienen-Nominalleiter, und hat Sammelschienen-Öffnungen 14, 24, 34 und 16, 26, 36 für einphasig von dem Gehäuseinneren wegführende Sammelschienen-Anschlüsse (einphasig aus dem Gehäuseinneren herausführende Anschlussstutzen). Entsprechendes gilt für die Abgangs-Öffnungen 56, 66, 76.

Das Gehäuse ist im Wesentlichen einstückig ausgebildet, d.h. abgesehen von für die Gehäuseform unwesentlichen Teilen (Sichtfenster, Zugänge, Schott-Isolatoren etc.) aus einem Stück gefertigt. Somit ist das Gehäuse als Ganzes montierbar. Das Gehäuse 1 ist ein Gußteil, d.h. ein formgegossenes Teil (und somit von formgießbarer Gestalt). Das Gehäuse 1 ist aus Aluminium oder einem anderen Metall und/oder deren Legierungen formgegossen. Wie dem auch sei, geschweisste Varianten des Gehäuses 1 sind denkbar. Das Gehäuse 1 ist so gestaltet, dass es einem Innendruck von mindestens 2 bar standhält. Ferner ist das Gehäuse 1 so gestaltet, dass es seine eigene Masse zu tragen vermag, wenn es an mindestens zweien der Flansche, insbesondere an dreien der Flansche, getragen wird, insbesondere wenn es an den Flanschen der Abgangsleiter-Öffnungen 56, 66, 76 getragen wird. Diese Bedingung stellt bestimmte Anforderungen an die Verwindungssteifigkeit des Wandmaterials und die Dicke der Flanschverbindungen, bietet aber Vorteile hinsichtlich der Montierbarkeit und der Befestigung in einem Schaltfeld.

Das Gehäuse 1 ist so gestaltet, dass es einen gemeinsamen Gasraum (Gasvolumen) für entlang einer Gerade angeordnete Leiterabschnitte (entlang der Geraden 4 und 4' angeordnete Sammelschienen-Leiterabschnitte und entlang der Gerade 6 angeordnete Abgangsleiterabschnitte) zur Verfügung stellt. Die Anordnung entlang einer Linie erlaubt eine auch für hohe Spannungen gute gegenseitige Abschirmung und Isolierung, und auch die Verwendbarkeit von bewährten Konzepten und Layouts einphasig gekapselter Schaltanlagensysteme. Weiter hat das gemeinsame Gasvolumen den Vorteil, dass die Befüllung mit Gas und die Überprüfung des Gasdrucks vereinfacht ist.

Darüber hinaus ist das Gehäuse 1 so gestaltet, dass die Außenfläche des Gehäuses 1 zumindest partiell eingezogen ausgebildet ist, also konkave Einbuchtungen hat. Diese Einbuchtungen sind beispielsweise in dem Übergangsbereich zwischen den ersten Sammelschienen-Öffnungen 14, 24, 34 und den Abgangsleiter-Öffnungen 56, 66, 76, zwischen den zweiten Sammelschienen-Öffnungen 16, 26, 36 und den Abgangsleiter-Öffnungen 56, 66, 76, und / oder zwischen den ersten Sammelschienen-Öffnungen 14, 24, 34 und den zweiten Sammelschienen-Öffnungen 16, 26, 36 vorhanden. Die Außenfläche ist hierbei als die globale Außenfläche ohne Rücksicht auf hierfür irrelevante lokale Elemente wie Schrauben, Griffe, usw. zu verstehen.

Durch die konkaven Einbuchtungen wird eine Reduzierung des Gasvolumens und/oder eine Vergrößerung der Oberfläche des Gehäuses 1 erreicht. Allgemein und unabhängig von der dargestellten Ausführungsform ist das Gasvolumen gegenüber einem gedachten, einhüllenden Quader 9 um mindestens 20% mindestens 30% oder sogar um mindestens 50% reduziert. Der gedachte Quader ist hierbei als der kleinste Quader definiert, der das Gasvolumen des Gehäuses 1 vollständig umfasst. In Fig. 2b ist der entsprechende gedachte Quader durch das gepunktete Quadrat 9 dargestellt.

Das Gehäuse weist ferner einige Durchbrüche auf, welche das Gehäuse durchstoßen. Besonders gut ist in Fig. 1b das Durchbruch 8 sichtbar, welches sich in dem Bereich zwischen den Sammelschienen-Gehäuseabschnitten 20 und 30 und zwischen den beiden äußeren Abgangsleiter-Gehäuseabschnitten 50 und 70 erstreckt. Der Durchbruch 8 durchstößt die Außenhülle und somit auch das Innenvolumen des Gehäuses 1. Hierbei ist der Durchbruch 8 nicht als Öffnung in der Gehäusewand zu verstehen, die einen Zugang zum Gasraum erlauben würde. Der Durchbruch stellt keine Verbindung zwischen dem Gasraum und dem Außenraum des Gehäuses her. Vielmehr ist unter einem Durchbruch ein topologisches Loch zu verstehen, das dazu führt, dass der Gasraum zwar ein zusammenhängendes Volumen, aber kein einfach zusammenhängendes Volumen bildet. Das Volumen kann auch als Volumen mit einem in der YZ-Ebene verlaufenden, ringartigen Querschnitt beschrieben werden (wobei "ringartig" nicht ausschließen soll, dass neben dem das Innere des Rings bildenden Durchbruch noch weitere Durchbrüche vorhanden sein können).

Weitere derartige Durchbrüche erstrecken sich in dem Bereich zwischen den Sammelschienen-Gehäuseabschnitten 10 und 20 und zum einen zwischen den Abgangsleiter-Gehäuseabschnitten 50 und 60, und zum anderen zwischen den Abgangsleiter-Gehäuseabschnitten 60 und 70.

Die eingezogene Gehäuseform und auch die Durchbrüche haben den Vorteil, dass der Gasraum 3 möglichst klein gehalten werden kann, so dass möglichst wenig Isoliergasvolumen bereitgestellt werden muss. Da viele Isoliergase wie SF6 ungünstige Umwelt-Eigenschaften haben und zudem kostspielig sind, hat dies den Vorteil, dass die benötigte Menge an Isoliergas reduziert ist. Die Durchbrüche haben zudem den Vorteil, dass dank ihnen das Verhältnis der Gehäuseoberfläche zu dessen Innenvolumen erhöht ist. Dadurch ist auch die Wärmeabfuhr aus dem Gehäuse erhöht. Zusätzlich stellen die Durchbrüche einen Transportgriff für das Gehäuse zur Verfügung und erlauben dadurch eine vereinfachte Handhabbarkeit des Gehäuses.

Ein weiterer vorteilhafter Aspekt des in Fig. 1 bis 4b dargestellten Gehäuses 1 sind seine Symmetrie-Eigenschaften. Die im Folgenden beschriebenen Symmetrien des Gehäuses bieten Vorteile im Hinblick auf seine vielfältige Verwendbarkeit im Rahmen eines modularen Systems. Zunächst haben bereits die Öffnungen, d.h. die ersten Sammelschienen-Öffnungen 14, 24, 34, die zweiten Sammelschienen-Öffnungen 16, 26, 36 und die Abgangs-Öffnungen 56, 66, 76 symmetrische Eigenschaften: Die Menge dieser Öffnungen sind spiegelsymmetrisch zu einer Spiegel-Ebene E5 angeordnet, welche in dieser Ausführungsform der in Fig. 2a mit IIIb gekennzeichneten Ebene entspricht. Diese Spiegel-Ebene IIIb ist parallel zu der ersten Öffnungs-Ebene E1 angeordnet. Die Spiegel-Ebene IIIb verläuft weiter durch die mittlere Abgangsleiter-Öffnung 66. Nicht nur die Öffnungen, sondern das ganze Gehäuse ist im Wesentlichen spiegelsymmetrisch zu der Spiegel-Ebene IIIb aufgebaut. Im Wesentlichen spiegelsymmetrisch bedeutet hier neben der oben beschriebenen Symmetrie bezüglich der Sammelschienen- und Abgangs-Öffnungen auch eine Symmetrie bezüglich der Hauptgeometrie des Gehäuses (nicht aber bezüglich etwaiger Hilfsanschlüsse und sonstiger unwesentlicher Details). Quantitativ ausgedrückt bedeutet "im Wesentlichen spiegelsymmetrisch", dass das bei Spiegelung nicht überlappende Volumen des Gasraums 3 nicht mehr als 5% des gesamten Volumens des Gasraums 3 betragen darf.

In Fig. 2a ist darüber hinaus gut zu sehen, wie die Abgangsleiter-Gehäuseabschnitte 50, 70 jeweils die Innenvolumina der Sammelschienen-Gehäuseabschnitte 10, 20, 30 miteinander verbinden. Der Abgangsleiter-Gehäuseabschnitt 60 verbindet dagegen nur die Innenvolumina der Sammelschienen-Gehäuseabschnitte 10 und 20 miteinander, stellt aber keine Verbindung zum Innenvolumen des Sammelschienen-Gehäuseabschnitts 30 her. Von dem Sammelschienen-Gehäuseabschnitt 30 ist der Abgangsleiter-Gehäuseabschnitt 60 durch den Durchbruch 8 getrennt. Dies ist ebenfalls in Fig. 3a bis 3c zu sehen, die seitliche Querschnitte des Schaltanlagenmodul-Gehäuses 1 darstellen, jeweils entlang der sich in x-z-Richtung erstreckenden Querschnittsebenen IIIa, IIIb bzw. IIIc (siehe Fig. 2a): In den Figuren 3a und 3c ist ebenfalls zu sehen, wie die Abgangsleiter-Gehäuseabschnitte 50, 70 jeweils die Innenvolumina der Sammelschienen-Gehäuseabschnitte 10, 20, 30 miteinander verbinden. In Fig. 3b ist zu sehen, wie der Abgangsleiter-Gehäuseabschnitt 60 nur die Innenvolumina der Sammelschienen-Gehäuseabschnitte 10 und 20 miteinander verbindet, aber von dem Sammelschienen-Gehäuseabschnitt 30 durch den Durchbruch 8 getrennt ist.

Das in Fig. 1a bis 4b dargestellte Gehäuse kann auf verschiedene Weisen verallgemeinert werden. So ist es etwa auch möglich, dass die zweiten Sammelschienen-Öffnungen nicht spiegelbildlich zu den ersten Sammelschienen-Öffnungen ausgebildet sind, sondern auf andere Weise gegenüber den ersten Sammelschienen-Öffnungen angeordnet sind. Allgemein können die zweiten Sammelschienen-Öffnungen auch z.B. schräg den ersten Sammelschienen-Öffnungen gegenüberliegen. Auch kann die zweite Gerade 6 auch auf andere Weise als in einem rechten Winkel zur ersten Gerade 4 geneigt sein, z.B. kann sie einen Winkel von 45° aufweisen.;

Fig. 5 zeigt ein Teil des Schaltanlagenmodul-Gehäuses gemäß einer weiteren Ausführungsform der Erfindung. Hierbei ist gegenüber Fig. 1a bis 4b das obere Ende 52 des Leiterabgangs-Gehäuseabschnitts 50 (siehe Fig. 1a) variiert. An dem Ende 52 ist in Fig. 5 eine Kühlvorrichtung zum Erhöhen (im Vergleich zu einer normalen, glatten Oberfläche) der Wärmeabfuhr aus dem Innenvolumen des Gehäuses über die Gehäuseoberfläche angebracht. In Fig. 5 umfasst die Kühlvorrichtung sternförmig verlaufende Kühlrippen 82. Die oberen Endstücke der übrigen Leiterabgangs-Gehäuseabschnitte sind in analoger Weise variiert und mit einer entsprechenden Kühlvorrichtung versehen. In alternativen Ausführungsformen (nicht dargestellt) umfasst die Kühlvorrichtung stattdessen parallel zueinander verlaufende Kühlrippen oder konzentrisch kreisförmig verlaufende Kühlrippen 86. Als weitere Variation kann auch statt den in Fig. 5 dargestellten passiven Kühlvorrichtungen eine aktive Kühlvorrichtung (mit Energiezufuhr für die Kühlung, z.B. ein Ventilator) eingesetzt werden. Auch ein Thermosiphon kann eingesetzt werden. Eine Kühlvorrichtung ist hier so verstanden, dass sie eine aktive oder passive Struktur mit planmäßig verbesserter Kühlung gegenüber einer glatten Oberfläche bedeutet.

Eine solche Kühlvorrichtung hat den Vorteil, dass Wärme noch effizienter aus dem Gehäuseinneren abgeführt wird. Die Anordnung an einem Abschluss-Stück des Abgangsleiter-Gehäuseabschnitts, hier also an den Oberen Endstücke 52, 62, 72 der Leiterabgangs-Gehäuseabschnitte 50, 60, 70 (siehe Fig. 1a) hat den Vorteil, dass aufgrund der Lage ganz oben im Gehäuse die Wärme dort die besondere Tendenz hat sich anzusammeln, und daher von dort besonders gut abgeführt werden kann.

Das Schaltanlagenmodul-Gehäuse 1 weist weiter verschiedene gasdicht verschließbare Öffnungen, Zugänge und Sichtfenster auf (nicht dargestellt). Die Sichtfenster und Zugänge sind gasdicht verschlossen, können aber teilweise geöffnet werden, um eine Kontrolle und Wartung des Gehäuseinneren zu erlauben. Die Zugänge können auch mit einer Gasleitung zur Befüllung des Gehäuseinneren mit Gas und zur Kontrolle des Gasdrucks verbunden werden. Die Sichtfenster können mit Berstscheiben ausgestattet sein.

### Bezugszeichenliste:

- 1: Gehäuse für Schaltanlagenmodul
- 3: Gasraum / Kammer
- 4: Erste Gerade (Gerade in z-Richtung für erste Sammelschienen-Öffnungen)
- 4': Dritte Gerade (Gerade in z-Richtung für zweite Sammelschienen-Öffnungen)
- 6: Zweite Gerade (Gerade in y-Richtung für Leiterabgangs-Öffnungen)
- 8: Loch / Durchbruch
- 9: Einhüllender Quader
- 10: Oberes Sammelschienen-Gehäuseabschnitt
- 12: zylinderartiger Gehäuseabschnitt
- 12a, 12b: Rohrstummel
- 14: Obere Sammelschienen-Öffnung
- 14a: Normale
- 15: Flansch
- 16: Obere Sammelschienen-Öffnung
- 17: Flansch
- 20: Mittleres Sammelschienen-Gehäuseabschnitt
- 22: zylinderartiger Gehäuseabschnitt
- 22a, 22b: Rohrstummel
- 24: Mittlere Sammelschienen-Öffnung
- 24a: Normale
- 25: Flansch
- 26: Mittlere Sammelschienen-Öffnung
- 27: Flansch
- 30: Unteres Sammelschienen-Gehäuseabschnitt
- 32: zylinderartiger Gehäuseabschnitt
- 32a, 32b: Rohrstummel
- 34: Untere Sammelschienen-Öffnung
- 34a: Normale
- 35: Flansch
- 36: Untere Sammelschienen-Öffnung
- 37: Flansch
- 40: Betätigungswellen-Gehäuseabschnitt
- 42: Betätigungswellen-Öffnung
- 50: Seitlicher Leiterabgangs-Gehäuseabschnitt
- 52: Oberes Endstück des Leiterabgangs-Gehäuseabschnitts
- 53: zylinderartiger Gehäuseabschnitt
- 53a: Rohrstummel
- 54: Unteres Übergangs-Stück
- 56: Seitliche Leiterabgangs-Öffnung
- 57: Flansch
- 60: Mittlerer Leiterabgangs-Gehäuseabschnitt
- 62: Oberes Endstück des Leiterabgangs-Gehäuseabschnitts
- 63: zylinderartiger Gehäuseabschnitt
- 63a: Rohrstummel
- 65: Unteres Endstück des Leiterabgangs-Gehäuseabschnitts
- 66: Mittlere Leiterabgangs-Öffnung
- 67: Flansch
- 70: Seitlicher Leiterabgangs-Gehäuseabschnitt
- 72: Oberes Endstück des Leiterabgangs-Gehäuseabschnitts
- 73: zylinderartiger Gehäuseabschnitt
- 73a: Rohrstummel
- 74: Unteres Übergangs-Stück
- 76: Seitliche Leiterabgangs-Öffnung
- 77: Flansch
- 82: Kühlrippen
- 144: Betätigungsachse
- E1: Erste Öffnungs-Ebene
- E2: Zweite Öffnungs-Ebene
- E3: Dritte Öffnungs-Ebene
- E4: Abgangs-Normalebene

## Patentansprüche

1. Gehäuse für ein Schaltanlagenmodul einer Schaltanlage, wobei das Gehäuse einen gemeinsamen Gasraum (3) geeignet zur Aufnahme von einem Isoliergas und von drei gasisolierten Sammelschienen-Nominalleitern des Schaltanlagenmoduls bildet und umfasst:
- drei erste Sammelschienen-Öffnungen (14, 24, 34), wobei die drei ersten Sammelschienen-Öffnungen (14, 24, 34) flächenmäßig in einer ersten Öffnungs-Ebene (E1) und entlang einer ersten Gerade (4) angeordnet sind;
- drei zweite Sammelschienen-Öffnungen (16, 26, 36), wobei die drei zweiten Sammelschienen-Öffnungen (16, 26, 36) auf einer den drei ersten Sammelschienen-Öffnungen (14, 24, 34) gegenüberliegenden Seite des Gehäuses angeordnet sind; und
- drei Abgangsleiter-Öffnungen (56, 66, 76), wobei die drei Abgangsleiter-Öffnungen (56, 66, 76) flächenmäßig in einer zweiten Öffnungs-Ebene (E2) und entlang einer zweiten Gerade (6) angeordnet sind,
**dadurch gekennzeichnet, dass**
- eine zu der zweiten Öffnungs-Ebene (E2) senkrechte und die zweite Gerade (6) enthaltende Abgangs-Normalebene (E4) zwischen einer äußeren (14) der ersten Sammelschienen-Öffnungen (14, 24, 34) und einer mittleren (24) der ersten Sammelschienen-Öffnungen (14, 24, 34) angeordnet ist, und
- eine Gehäuse-Außenfläche des Gehäuses bezüglich einer konvexen Einhüllenden zumindest partiell eingezogen ausgebildet ist.

2. Gehäuse nach Anspruch 1, wobei die zweite Gerade (6) gegenüber der ersten Gerade (4) geneigt, insbesondere senkrecht, zur ersten Gerade verläuft.

3. Gehäuse nach Anspruch 1 oder 2, wobei die erste Gerade (4), die zweite Gerade (6), die erste Öffnungs-Ebene bzw. die zweite Öffnungs-Ebene gemäß zumindest einer der folgenden Anordnungen (a) bis (d) verlaufen:
(a) Die zweite Öffnungs-Ebene (E2) ist quer, insbesondere senkrecht, zu der ersten Öffnungs-Ebene (E1) angeordnet;
(b): Die zweite Gerade (6) ist gegenüber der ersten Geraden (4) so versetzt, dass sich die erste Gerade (4) und die zweite Gerade (6) nicht schneiden, und die zweite Öffnungs-Ebene (E2) erstreckt sich parallel zu einer Ebene, welche aus der ersten Ebene durch eine 90 Grad-Drehung um die erste Gerade (4) hervorgeht;
(c): Die zweite Gerade (6) verläuft geneigt, insbesondere senkrecht, zu der ersten Öffnungs-Ebene (E1);
(d) Die erste Gerade (4) verläuft parallel zu der zweiten Öffnungs-Ebene (E2).

4. Gehäuse nach einem der vorangehenden Ansprüche, wobei das Innenvolumen des Gehäuses einen zusammenhängenden Gasraum (3) bildet, wobei die drei ersten Sammelschienen-Öffnungen (14, 24, 34), die drei zweiten Sammelschienen-Öffnungen (16, 26, 36), und die drei Abgangsleiter-Öffnungen (56, 66, 76) jeweils einen für jeden Nominalleiter separaten Zugang zum Gasraum von außerhalb des Gehäuses bilden.

5. Gehäuse nach einem der vorangehenden Ansprüche, wobei die drei zweiten Sammelschienen-Öffnungen (16, 26, 36) flächenmäßig in einer dritten Öffnungs-Ebene (E3) und entlang einer dritten Gerade (4') angeordnet sind, wobei die dritte Öffnungs-Ebene (E3) parallel zu der ersten Öffnungs-Ebene (E1) ist und die dritte Gerade (4') parallel zur ersten Gerade (4) ist.

6. Gehäuse nach einem der vorangehenden Ansprüche, wobei eine jede der drei zweiten Sammelschienen-Öffnungen (16, 26, 36) gegenüber einer zugeordneten der drei ersten Sammelschienen-Öffnungen (14, 24, 34) angeordnet ist und mit dieser ein jeweiliges Sammelschienen-Öffnungs-Paar zur Aufnahme eines jeweiligen durchgehenden geraden Sammelschienen-Leiterabschnitts dazwischen bildet.

7. Gehäuse nach einem der vorangehenden Ansprüche, wobei jeweilige Mitten der drei ersten Sammelschienen-Öffnungen (14, 24, 34) in einem gleichmäßigen Einheits-Abstand zueinander entlang der ersten Gerade (4) aufgereiht sind, und / oder jeweilige Mitten der drei Abgangsleiter-Öffnungen (56, 66, 76) in dem gleichmäßigen Einheits-Abstand zueinander entlang der zweiten Gerade (4) aufgereiht sind und / oder jeweilige Mitten der drei zweiten Sammelschienen-Öffnungen (16, 26, 36) in dem gleichmäßigen Einheits-Abstand zueinander entlang einer dritten Gerade (4') aufgereiht sind.

8. Gehäuse nach Anspruch 1, wobei die Abgangs-Normalebene (E4) mittig zwischen der äußeren (14) der ersten Sammelschienen-Öffnungen (14, 24, 34) und der mittleren (24) der ersten Sammelschienen-Öffnungen (14, 24, 34) angeordnet ist.

9. Gehäuse nach einem der vorangehenden Ansprüche, wobei das Gehäuse einstückig und / oder als Gussteil ausgebildet ist.

10. Gehäuse nach einem der vorangehenden Ansprüche, wobei die ersten Sammelschienen-Öffnungen und / oder die zweiten Sammelschienen-Öffnungen und / oder die Abgangs-Öffnungen über einen jeweiligen Rohrstummel mit einer Hauptkammer des gemeinsamen Gasraums (3) verbunden sind.

11. Gehäuse nach einem der vorangehenden Ansprüche, wobei die ersten Sammelschienen-Öffnungen und / oder die zweiten Sammelschienen-Öffnungen und / oder die Abgangs-Öffnungen anschlussseitig je einen die jeweilige Öffnung umfangsseitig umgebenden Flansch aufweisen.

12. Gehäuse nach Anspruch 11, wobei das Gehäuse und die Flansche so gestaltet sind, dass das Gehäuse seine eigene Masse zu tragen vermag, wenn es an mindestens zweien der Flansche, insbesondere an dreien der Flansche, getragen wird, insbesondere wenn es an den Flanschen der Abgangsleiter-Öffnungen (56, 66, 76) getragen wird.

13. Gehäuse nach einem der vorangehenden Ansprüche, weiter umfassend drei Abgangsleiter-Gehäuseabschnitte (50, 60, 70), wobei die drei Abgangsleiter-Öffnungen (56, 66, 76) an jeweils einem der drei Abgangsleiter-Gehäuseabschnitte angeordnet sind, und drei sich zwischen einer jeweiligen der ersten Sammelschienen-Öffnungen (14, 24, 34) und einer jeweiligen der zweiten Sammelschienen-Öffnungen (16, 26, 36) erstreckende Sammelschienen-Gehäuseabschnitte (10, 20, 30), wobei zumindest einer der drei Abgangsleiter-Gehäuseabschnitte (50, 60, 70) die Innenvolumina von jeweils zumindest zweien der drei Sammelschienen-Gehäuseabschnitte (10, 20, 30) des Gasraums (3) miteinander verbindet.

14. Gehäuse nach Anspruch 13, wobei ein erster Abgangsleiter-Gehäuseabschnitt der drei Abgangsleiter-Gehäuseabschnitte (50, 60, 70) die drei Sammelschienen-Gehäuseabschnitte (10, 20, 30) direkt miteinander verbindet,
und wobei ein zweiter Abgangsleiter-Gehäuseabschnitt der drei Abgangsleiter-Gehäuseabschnitte 50, 60, 70) lediglich zwei der drei Sammelschienen-Gehäuseabschnitte (10, 20) direkt miteinander verbindet,
und wobei ein dritter Abgangsleiter-Gehäuseabschnitt der drei Abgangsleiter-Gehäuseabschnitte (50, 60, 70) lediglich mit einem einzigen (10) der drei Sammelschienen-Gehäuseabschnitte (10, 20, 30) direkt verbunden ist.

15. Gehäuse nach einem der vorangehenden Ansprüche, wobei das Gehäuse zumindest einen Durchbruch (8) aufweist, welcher den gemeinsamen Gasraum (3) durchstößt.

16. Gehäuse nach einem der vorangehenden Ansprüche, weiter umfassend eine Kühlvorrichtung zum Erhöhen der Wärmeabfuhr aus dem Gasraum (3) des Gehäuses.

17. Gehäuse nach einem der vorangehenden Ansprüche, wobei die Menge der Öffnungen umfassend die ersten Sammelschienen-Öffnungen, die zweiten Sammelschienen-Öffnungen und die Abgangs-Öffnungen spiegelsymmetrisch zu einer Spiegel-Ebene (E5) angeordnet sind, und wobei die Spiegel-Ebene parallel zu der ersten Öffnungs-Ebene (E1) angeordnet ist.

18. Schaltfeld, beinhaltend ein Gehäuse nach einem der vorangehenden Ansprüche.

## Claims

1. Housing for a switchgear assembly module of a switchgear assembly, wherein the housing forms a common gas space (3) suitable for accommodating an insulating gas and three gas-insulated busbar nominal conductors of the switchgear assembly module and comprises:
- three first busbar openings (14, 24, 34), wherein the three first busbar openings (14, 24, 34) are arranged areally in a first opening plane (E1) and along a first straight line (4);
- three second busbar openings (16, 26, 36), wherein the three second busbar openings (16, 26, 36) are arranged on a side of the housing which is opposite the three first busbar openings (14, 24, 34); and
- three outgoing conductor openings (56, 66, 76), wherein the three outgoing conductor openings (56, 66, 76) are arranged areally in a second opening plane (E2) and along a second straight line (6),
**characterized in that**
- an outgoing normal plane (E4), which is perpendicular to the second opening plane (E2) and contains the second straight line (6), is arranged between an outer one (14) of the first busbar openings (14, 24, 34) and a central one (24) of the first busbar openings (14, 24, 34), and
- a housing outer surface of the housing is designed to be at least partially retracted with respect to a convex envelope.

2. Housing according to Claim 1, wherein the second straight line (6) runs at an incline with respect to the first straight line (4), in particular perpendicular to the first straight line.

3. Housing according to Claim 1 or 2, wherein the first straight line (4), the second straight line (6), the first opening plane or the second opening plane run in accordance with at least one of the following arrangements (a) to (d):
(a) the second opening plane (E2) is arranged transversely, in particular perpendicular, to the first opening plane (E1) ;
(b): the second straight line (6) is offset with respect to the first straight line (4) in such a way that the first straight line (4) and the second straight line (6) do not intersect one another and the second opening plane (E2) extends parallel to a plane which emerges from the first plane through a 90 degree rotation about the first straight line (4);
(c): the second straight line (6) runs inclined, in particular perpendicular, to the first opening plane (E1) ;
(d) the first straight line (4) runs parallel to the second opening plane (E2).

4. Housing according to one of the preceding claims, wherein the internal volume of the housing forms a continuous gas space (3), wherein the three first busbar openings (14, 24, 34), the three second busbar openings (16, 26, 36), and the three outgoing conductor openings (56, 66, 76) each form a separate access for each nominal conductor to the gas space from outside the housing.

5. Housing according to one of the preceding claims, wherein the three second busbar openings (16, 26, 36) are arranged areally in a third opening plane (E3) and along a third straight line (4'), wherein the third opening plane (E3) is parallel to the first opening plane (E1) and the third straight line (4') is parallel to the first straight line (4).

6. Housing according to one of the preceding claims, wherein each of the three second busbar openings (16, 26, 36) is arranged with respect to an associated one of the three first busbar openings (14, 24, 34) and forms therewith a respective busbar opening pair for accommodating a respective continuous straight busbar conductor section therebetween.

7. Housing according to one of the preceding claims, wherein respective centres of the three first busbar openings (14, 24, 34) are arranged in a row at a uniform unit distance from one another along the first straight line (4), and/or respective centres of the three outgoing conductor openings (56, 66, 76) are arranged in a row at the uniform unit distance from one another along the second straight line (4) and/or respective centres of the three second busbar openings (16, 26, 36) are arranged in a row at the uniform unit distance from one another along a third straight line (4') .

8. Housing according to Claim 1, wherein the outgoing normal plane (E4) is arranged centrally between the outer one (14) of the first busbar openings (14, 24, 34) and the central one (24) of the first busbar openings (14, 24, 34) .

9. Housing according to one of the preceding claims, wherein the housing is integral and/or in the form of a casting.

10. Housing according to one of the preceding claims, wherein the first busbar openings and/or the second busbar openings and/or the outgoing openings are connected to a main chamber of the common gas space (3) via a respective tube stump.

11. Housing according to one of the preceding claims, wherein the first busbar openings and/or the second busbar openings and/or the outgoing openings have in each case one flange, which surrounds the respective openings circumferentially, on the connection side.

12. Housing according to Claim 11, wherein the housing and the flanges are designed such that Housing is capable of supporting its own mass if it is supported on at least two of the flanges, in particular on three of the flanges, in particular if it is supported on the flanges of the outgoing conductor openings (56, 66, 76).

13. Housing according to one of the preceding claims, further comprising three outgoing conductor housing sections (50, 60, 70), wherein the three outgoing conductor openings (56, 66, 76) are arranged on a respective one of the three outgoing conductor housing sections, and three busbar housing sections (10, 20, 30), which extend between a respective one of the first busbar openings (14, 24, 34) and a respective one of the second busbar openings (16, 26, 36), wherein at least one of the three outgoing conductor housing sections (50, 60, 70) connects the internal volumes of in each case at least two of the three busbar housing sections (10, 20, 30) of the gas space (3) to one another.

14. Housing according to Claim 13, wherein a first outgoing conductor housing section of the three outgoing conductor housing sections (50, 60, 70) connects the three busbar housing sections (10, 20, 30) directly to one another,
and wherein a second outgoing conductor housing section of the three outgoing conductor housing sections (50, 60, 70) connects only two of the three busbar housing sections (10, 20) directly to one another,
and wherein a third outgoing conductor housing section of the three outgoing conductor housing sections (50, 60, 70) is connected directly only to a single one (10) of the three busbar housing sections (10, 20, 30).

15. Housing according to one of the preceding claims, wherein the housing has at least one aperture (8), which passes through the common gas space (3).

16. Housing according to one of the preceding claims, further comprising a cooling device for increasing the heat dissipation from the gas space (3) of the housing.

17. Housing according to one of the preceding claims, wherein the set of openings comprising the first busbar openings, the second busbar openings and the outgoing openings are arranged in mirror-symmetrical fashion with respect to a mirror plane (E5), and wherein the mirror plane is arranged parallel to the first opening plane (E1) .

18. Switchpanel, containing a housing according to one of the preceding claims.

## Revendications

1. Enveloppe pour un module d'installation de commutation d'une installation de commutation, dans laquelle l'enveloppe forme une chambre à gaz commune (3) convenant pour contenir un gaz isolant et trois conducteurs nominaux de barre collectrice à isolation gazeuse du module d'installation de commutation et comprend:
- trois premières ouvertures de barre collectrice (14, 24, 34), dans laquelle les trois premières ouvertures de barre collectrice (14, 24, 34) sont disposées en surface dans un premier plan d'ouvertures (E1) et le long d'une première droite (4);
- trois deuxièmes ouvertures de barre collectrice (16, 26, 36), dans laquelle les trois deuxièmes ouvertures de barre collectrice (16, 26, 36) sont disposées sur un côté de l'enveloppe à l'opposé des trois premières ouvertures de barre collectrice (14, 24, 34); et
- trois ouvertures de conducteur de sortie (56, 66, 76), dans laquelle les trois ouvertures de conducteur de sortie (56, 66, 76) sont disposées en surface dans un deuxième plan d'ouvertures (E2) et le long d'une deuxième droite (6),
**caractérisée en ce que**
- un plan normal de sortie (E4) perpendiculaire au deuxième plan d'ouvertures (E2) et contenant la deuxième droite (6) est disposé entre une ouverture extérieure (14) des premières ouvertures de barre collectrice (14, 24, 34) et une ouverture centrale (24) des premières ouvertures de barre collectrice (14, 24, 34), et
- une face extérieure d'enveloppe de l'enveloppe est réalisée au moins partiellement en retrait par rapport à une enveloppante convexe.

2. Enveloppe selon la revendication 1, dans laquelle la deuxième droite (6) est inclinée par rapport à la première droite (4), et s'étend en particulier perpendiculairement à la première droite.

3. Enveloppe selon la revendication 1 ou 2, dans laquelle la première droite (4), la deuxième droite (6), le premier plan d'ouvertures ou le deuxième plan d'ouvertures sont agencés selon au moins une des dispositions suivantes (a) à (d):
(a) le deuxième plan d'ouvertures (E2) est disposé transversalement, en particulier perpendiculairement, au premier plan d'ouvertures (E1);
(b) la deuxième droite (6) est décalée par rapport à la première droite (4), de telle manière que la première droite (4) et la deuxième droite (6) ne se coupent pas, et le deuxième plan d'ouvertures (E2) s'étend parallèlement à un plan, qui émane du premier plan d'ouvertures par une rotation de 90° autour de la première droite (4);
(c) la deuxième droite (6) est inclinée, en particulier perpendiculaire, par rapport au premier plan d'ouvertures (E1) ;
(d) la première droite (4) est parallèle au deuxième plan d'ouvertures (E2).

4. Enveloppe selon l'une quelconque des revendications précédentes, dans laquelle le volume intérieur de l'enveloppe forme une chambre à gaz continue (3), dans laquelle les trois premières ouvertures de barre collectrice (14, 24, 34), les trois deuxièmes ouvertures de barre collectrice (16, 26, 36), et les trois ouvertures de conducteur de sortie (56, 66, 76) forment respectivement un accès séparé pour chaque conducteur nominal à la chambre à gaz depuis l'extérieur de l'enveloppe.

5. Enveloppe selon l'une quelconque des revendications précédentes, dans laquelle les trois deuxièmes ouvertures de barre collectrice (16, 26, 36) sont disposées en surface dans un troisième plan d'ouvertures (E3) et le long d'une troisième droite (4'), dans laquelle le troisième plan d'ouvertures (E3) est parallèle au premier plan d'ouvertures (E1) et la troisième droite (4') est parallèle à la première droite (4).

6. Enveloppe selon l'une quelconque des revendications précédentes, dans laquelle chacune des trois deuxièmes ouvertures de barre collectrice (16, 26, 36) est disposée en face d'une des trois premières ouvertures de barre collectrice (14, 24, 34) qui lui est associée et elle forme avec celle-ci une paire respective d'ouvertures de barre collectrice destinées à contenir entre elles respectivement une section de conducteur de barre collectrice droite continue.

7. Enveloppe selon l'une quelconque des revendications précédentes, dans laquelle des centres respectifs des trois premières ouvertures de barre collectrice (14, 24, 34) sont alignés le long d'une première droite (4) à une distance unitaire uniforme l'un par rapport à l'autre, et/ou les centres respectifs des trois ouvertures de conducteur de sortie (56, 66, 76) sont alignés le long de la deuxième droite (4) à la distance unitaire uniforme l'un par rapport à l'autre et/ou les centres respectifs des trois deuxièmes ouvertures de barre collectrice (16, 26, 36) sont alignés le long d'une troisième droite (4') à la distance unitaire uniforme l'un de l'autre.

8. Enveloppe selon la revendication 1, dans laquelle le plan normal de sortie (E4) est disposé au milieu entre l'ouverture extérieure (14) des premières ouvertures de barre collectrice (14, 24, 34) et l'ouverture centrale (24) des premières ouvertures de barre collectrice (14, 24, 34) .

9. Enveloppe selon l'une quelconque des revendications précédentes, dans laquelle l'enveloppe est réalisée d'une seule pièce et/ou sous forme de pièce coulée.

10. Enveloppe selon l'une quelconque des revendications précédentes, dans laquelle les premières ouvertures de barre collectrice et/ou les deuxièmes ouvertures de barre collectrice et/ou les ouvertures de sortie sont raccordées à une chambre principale de la chambre à gaz commune (3) au moyen d'un conduit tubulaire respectif.

11. Enveloppe selon l'une quelconque des revendications précédentes, dans laquelle les premières ouvertures de barre collectrice et/ou les deuxièmes ouvertures de barre collectrice et/ou les ouvertures de sortie présentent chacune, du côté du raccord, une bride entourant en périphérie l'ouverture respective.

12. Enveloppe selon la revendication 11, dans laquelle l'enveloppe et les brides sont configurées d'une manière telle que l'enveloppe soit capable de supporter sa propre masse, lorsqu'elle est portée à au moins deux des brides, en particulier à trois des brides, en particulier lorsqu'elle est portée aux brides des ouvertures de sortie (56, 66, 76).

13. Enveloppe selon l'une quelconque des revendications précédentes, comprenant en outre trois parties d'enveloppe pour conducteur de sortie (50, 60, 70), dans laquelle les trois ouvertures de conducteur de sortie (56, 66, 76) sont disposées respectivement à une des trois parties d'enveloppe pour conducteur de sortie, et trois parties d'enveloppe de barre collectrice (10, 20, 30) s'étendant entre une ouverture respective des premières ouvertures de barre collectrice (14, 24, 34) et une ouverture respective des deuxièmes ouvertures de barre collectrice (16, 26, 36), dans laquelle au moins une des trois parties d'enveloppe pour conducteur de sortie (50, 60, 70) relie l'un à l'autre les volumes internes à chaque fois d'au moins deux des trois parties d'enveloppe de barre collectrice (10, 20, 30) de la chambre à gaz ( 3 ) .

14. Enveloppe selon la revendication 13, dans laquelle une première partie d'enveloppe pour conducteur de sortie des trois parties d'enveloppe pour conducteur de sortie (50, 60, 70) relie directement l'une à l'autre les trois parties d'enveloppe de barre collectrice (10, 20, 30), et dans laquelle une deuxième partie d'enveloppe pour conducteur de sortie des trois parties d'enveloppe pour conducteur de sortie (50, 60, 70) relie directement l'une à l'autre uniquement deux des trois parties d'enveloppe de barre collectrice (10, 20), et dans laquelle une troisième partie d'enveloppe pour conducteur de sortie des trois parties d'enveloppe pour conducteur de sortie (50, 60, 70) est directement reliée uniquement à une seule (10) des trois parties d'enveloppe de barre collectrice (10, 20, 30).

15. Enveloppe selon l'une quelconque des revendications précédentes, dans laquelle l'enveloppe présente au moins un passage (8), qui traverse la chambre à gaz commune (3) .

16. Enveloppe selon l'une quelconque des revendications précédentes, comprenant en outre un dispositif de refroidissement pour augmenter l'évacuation de chaleur hors de la chambre à gaz (3) de l'enveloppe.

17. Enveloppe selon l'une quelconque des revendications précédentes, dans laquelle le total des ouvertures comprenant les premières ouvertures de barre collectrice, les deuxièmes ouvertures de barre collectrice et les ouvertures de sortie sont disposées de façon symétrique par rapport à un plan de symétrie (E5), et dans laquelle le plan de symétrie est disposé parallèlement au premier plan d'ouvertures (E1) .

18. Tableau de distribution, comportant une enveloppe selon l'une quelconque des revendications précédentes.
